# EUROPEAN PATENT SPECIFICATION

(11) **EP 4 156 894 B1**
(45) Date of publication and mention of the grant of the patent: **09.12.2026**
(21) Application number: 21812440.2
(22) Date of filing: 24.05.2021
(51) Int. Cl.: A01D 34/43, A01D 43/00, A01D 43/10, A01D 43/07, A01D 43/08

(54) **A HARVESTING MACHINE HAVING A MOISTURE REMOVAL MECHANISM**
ERNTEMASCHINE MIT FEUCHTIGKEITSENTFERNUNGSMECHANISMUS
MACHINE DE RÉCOLTE AYANT UN MÉCANISME D'ÉLIMINATION D'HUMIDITÉ

(30) Priority: 27.05.2020 US 202016884134
(43) Date of publication of application: 05.04.2023
(73) Proprietor: Baum Machine, Inc, Appleton, WI 54915 (US)
(72) Inventor: BAUM, Rodger, Appleton, Wisconsin 54915 (US); BAUM, Charles, Appleton, Wisconsin 54915 (US)
(74) Representative: Diehl & Partner
(86) International application number: PCT/US2021/033813
(87) International publication number: WO 2021/242661

(56) References cited:
- EP-B1- 0 205 206
- WO-A1-94/05148
- US-A- 4 912 914
- US-A1- 2009 205 307
- US-A1- 2011 116 122
- US-A1- 2014 230 395
- US-A1- 2018 306 502
- US-A1- 2019 313 579
- SAVOIE P ET AL: "DEVELOPMENT AND EVALUATION OF A LARGE-SCALE FORAGE MAT MAKER", TRANSACTIONS OF THE AMERICAN SOCIETY OF AGRICULTURAL ENGINEERS, AMERICAN SOCIETY OF AGRICULTURAL ENGINEERS. ST.JOSEPH, MI, US, vol. 36, no. 2, 1 March 1993 (1993-03-01), pages 285 - 291, XP000370697, ISSN: 0001-2351

## Description

### FIELD OF THE INVENTION

This invention relates to a harvesting machine having a moisture removal mechanism. A method of operating the harvesting machine and a header, which can be attached to a self-propelled unit, are also disclosed.

### BACKGROUND OF THE INVENTION

For centuries, farmers have cut forage crops for animals, such as alfalfa, hay, tall grass, etc., using hand tools. A hand sickle having a semi-circular blade is still used in many parts of the world. With advancement in mechanized machinery, harvesting machines have now replaced hand tools, especially in the more industrialized countries. A harvesting machine can be towed behind a tractor or it can be a self-propelled unit. Currently, a cut forage crop is deposited back onto the field in rows where it can be dried by the sun. The rows of crop, such as alfalfa, can be turned over once or twice during the drying process before the dried cut crop is picked up, chopped and blown into a storage wagon and/or taken to a silo for long term storage. The forage crop, especially alfalfa, is used as a feed crop for milking cows.

One major disadvantage with harvesting crops using a conventional haybine is that the weather must be dry for a few days or the farmer could lose a portion of his cut crop to mildew or mold while it is lying in the field. Farmers tend to listen to the weather forecast and if rain is imminent, they will not cut their crop until clear weather is forecast for a couple of days. This is especially true when harvesting alfalfa. If a farmer did cut his forage crop, and then it rained before his crop was fully dried by the sun, he would have to wait longer for his crop to dry. Worst case, the farmer could lose a portion of his crop to mildew and mold.

Document US 4 912 914 A discloses a machine for harvesting and drying a standing forage crop, the machine comprising in combination a mower, a plurality of heated rollers for receiving a flow of crop cuttings conveyed from the mower to squeeze substantial excess moisture and evaporate any remaining excess moisture so that the crop cuttings upon issuance from the heated rollers are ready for baling.

Now a harvesting machine has been invented which includes a moisture removal mechanism which can remove a portion of the moisture present in the stems of the harvested crop. The moisture is removed by the harvesting machine immediately after the crop is cut and while the harvesting machine is still in the field. The harvesting machine also includes a crop converging mechanism, located behind the moisture removal mechanism, which gathers the low moisture content crop and directs it to baler or a chopper. A baler will deposit either a round or a square bale onto the field, while a chopper will chop and blow the crop into a storage wagon for direct transport to a silo for long term storage.

A method of operating the harvesting machine and a header, which can be attached to a self-propelled unit, are also disclosed.

### SUMMARY OF THE INVENTION

Briefly, this invention relates to a harvesting machine having a moisture removal mechanism. This invention also relates to a method of operating the harvesting machine and to a header, which can be attached to the front of a self-propelled unit.

The harvesting machine includes a frame having a first end and a second end, at least one axle having a pair of wheels, and having a bottom plate positioned adjacent to the first end. The bottom plate has a front edge and a rear edge. A rotatable pick-up head is pivotally mounted on the first end of the frame. The pick-up head has at least two spaced apart and outwardly extending finger sets. Each finger set contains a plurality of fingers spaced apart from one another across the width of the pick-up head. Each finger set sequentially contacts the growing plants in a field. Each plant has a stem contains a relatively high moisture content and a base. Each of the finger sets bends the stems downward onto the bottom plate. The harvesting machine also includes a cutting mechanism mounted on the bottom plate below the pick-up head. The cutting mechanism cuts each of the stems at the respective base to form a moving web as the harvesting machine traverses a crop field. A first moisture removal mechanism is positioned downstream of the cutting mechanism. The first moisture removal mechanism includes a first suction roll positioned below a first press roll. A second moisture removal mechanism is positioned downstream of the first moisture removal mechanism. The second moisture removal mechanism includes a second suction roll positioned below a second press roll. Lastly, the harvesting machine includes a moving belt forming a closed loop around both the first and second moisture removal mechanisms. The moving belt has a plurality of apertures formed therethrough. The moving belt forms a first nip with the first press roll and a second nip with the second press roll for squeezing moisture out of the cut stems as the movable web is routed through the first and second nips.

A method of operating a harvesting machine is also disclosed. The harvesting machine includes a frame having a first end and a second end, at least one axle having a pair of wheels, and having a bottom plate positioned adjacent to the first end. The bottom plate has a front edge and a rear edge, and the bottom plate is inclined upward towards the rear edge. A rotatable pick-up head is pivotally mounted on the first end of the frame. The pick-up head has at least two spaced apart and outwardly extending finger sets. Each finger set contains a plurality of fingers spaced apart from one another across the width of the pick-up head. Each finger set sequentially contacts the growing plants in a field. Each plant has a stem contains a relatively high moisture content and a base. Each of the finger sets bends the stems downward onto the bottom plate and towards the incline. The harvesting machine also includes a cutting mechanism mounted on the bottom plate below the pick-up head. The cutting mechanism cuts each of the stems at the respective base to form a movable web as the harvesting machine traverses a crop field. A first moisture removal mechanism is positioned downstream of the cutting mechanism. The first moisture removal mechanism includes a first suction roll positioned below a first press roll. A second moisture removal mechanism is positioned downstream of the first moisture removal mechanism. The second moisture removal mechanism includes a second suction roll positioned below a second press roll. Lastly, the harvesting machine includes a moving belt forming a closed loop around both the first and second moisture removal mechanisms. The moving belt has a plurality of apertures formed therethrough. The moving belt forms a first nip with the first press roll and a second nip with the second press roll for squeezing moisture out of the cut stems as the movable web is routed through the first and second nips. The method includes the steps of attaching the harvesting machine to a self-propelled unit which can be driven across a field for the purpose of harvesting a crop. The pick-up head is rotated and the cutting mechanism is activated to cut each of the stems at the stem base. The cut stems are then routed into the harvesting machine as a movable web. The movable web is then directed between the first and second nips to reduce the moisture content of the movable web by forcing moisture out of each of the stems.

A header for attachment to a self-propelled unit or to a chopper type machine, which is either self-propelled or a pull-type unit, is also disclosed. The header includes a frame having a first end and a second end, and having a bottom plate positioned adjacent to the first end. The bottom plate has a front edge and a rear edge, and the bottom plate is inclined upward towards the rear edge. A rotatable pick-up head is pivotally mounted on the first end of the frame. The pick-up head has at least two spaced apart and outwardly extending finger sets. Each finger set contains a plurality of fingers spaced apart from one another across the width of the pick-up head. Each finger set sequentially contacts the growing plants in a field. Each plant having a stem contains a relatively high moisture content and a base. Each of the finger sets bends the stems downward onto the bottom plate and towards the incline. The header also includes a cutting mechanism mounted on the bottom plate below the pick-up head. The cutting mechanism cuts each of the stems at the respective base to form a moving web as the harvesting machine traverses a crop field. A first moisture removal mechanism is positioned downstream of the cutting mechanism. The first moisture removal mechanism includes a first suction roll positioned below a first press roll. A second moisture removal mechanism is positioned downstream of the first moisture removal mechanism. The second moisture removal mechanism includes a second suction roll positioned below a second press roll. Lastly, the header includes a moving belt forming a closed loop around both the first and second moisture removal mechanisms. The moving belt has a plurality of apertures formed therethrough. The moving belt forms a first nip with the first press roll and a second nip with the second press roll for squeezing moisture out of the stems as the movable web is routed through the first and second nips.

The general object of this invention is to provide a harvesting machine having a moisture removal mechanism. A more specific object of this invention is to provide a harvesting machine that has a crop converging mechanism.

Another object of this invention is to provide a method of operating the harvesting machine.

A further object of this invention is to provide a header for attachment to a self-propelled unit or to a chopper type machine.

Still another object of this invention is to provide a harvesting machine which can reduce the moisture content of a crop immediately after the crop is cut.

Still further, an object of this invention is to provide a harvesting machine which can cut a crop, reduce the moisture content of the cut crop, and then bale the cut crop.

Other objects and advantages of the present invention will become more apparent to those skilled in the art in view of the following description and the accompanying drawings.

### BRIEF DESCRIPTION OF THE DRAWINGS

Fig. 1 is a schematic view of the harvesting machine being pulled behind a tractor.
Fig. 2 is a schematic view of the harvesting machine as a self propelled unit.
Fig. 3 is a perspective view of the harvesting machine having a pair of suction and press rolls.
Fig. 4 is a side view of a portion of the harvesting machine, shown in Fig. 3, before the pair of augers.
Fig. 5 is a vertical sectional view of Fig. 4 taken along line 5--5 looking towards the front of the harvesting machine.
Fig. 6 is a perspective view of a moving web.
Fig. 7 is a cross-sectional view of the suction roll.
Fig. 8 is a vertical section view of the suction roll taken along line 8--8.
Fig. 9 is a cross-sectional view of the suction roll shown in Fig. 7 showing a pair of air load tubes used to bias the pair of seals outward against the interior surface of the suction roll.
Fig. 10 is a top view of a section of a wire belt having a plurality of apertures formed therethrough.
Fig. 11 is a perspective view of the crop converging mechanism.
Fig. 12 is a side view of the harvesting machine showing a storage vessel in which the removed liquid is recovered and temporarily stored.
Fig. 13 is a section view of a self-propelled tractor showing a vacuum pump which is capable of depositing removed plant moisture directly onto the ground.
Fig. 14 is a perspective view of a self-propelled unit.
Fig. 15 is a perspective view of a header for harvesting a forage crop which can be attached to a self-propelled machine or be attached to an existing chopper type machine.
Fig. 16 is a perspective view of a self-propelled harvesting machine with an attached header as is shown in Fig. 15.
Fig. 17 is a perspective view of a self-propelled harvesting machine which is towing a separate baler unit.
Fig. 18 is a perspective view of a self-propelled harvesting machine which includes an integral baler unit.

### DETAILED DESCRIPTION OF THE INVENTION

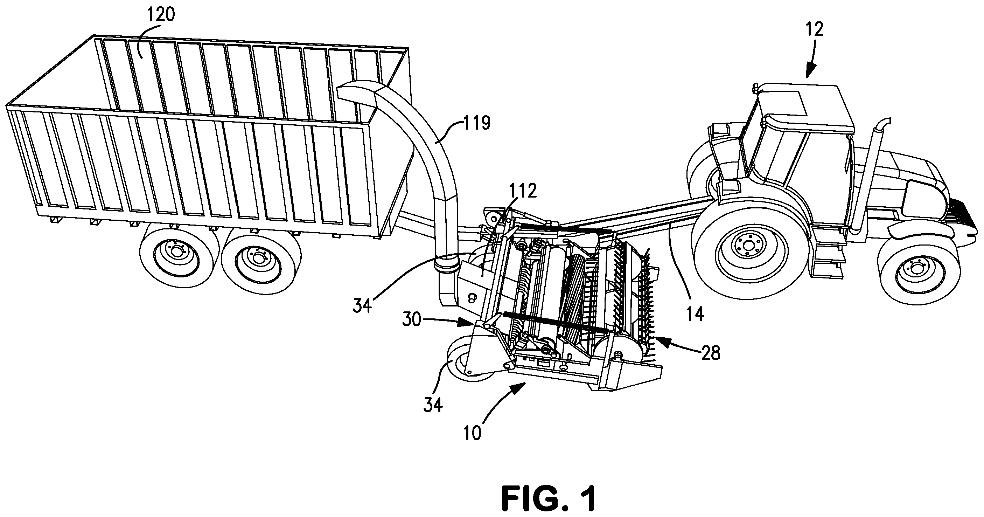

Referring to Fig. 1, a harvesting machine 10 is shown being pulled behind a tractor 12. The size, design and horsepower of the tractor 12 can vary. The harvesting machine 10 is connected to the tractor 12 via a linkage bar 14. In addition, the harvesting machine 10 can be mechanically, hydraulically, pneumatically and/or electrically connected to the tractor 12, as is well known in the art. A power takeoff unit (not shown) on the rear of the tractor 12 can supply mechanical power to the harvesting machine 10. Hydraulic and pneumatic hoses (not shown) can be used to supply pressurized fluid and/or air to the harvesting machine 10. Lastly, electrical wires (not shown) can be used to supply electricity to the harvesting machine 10.

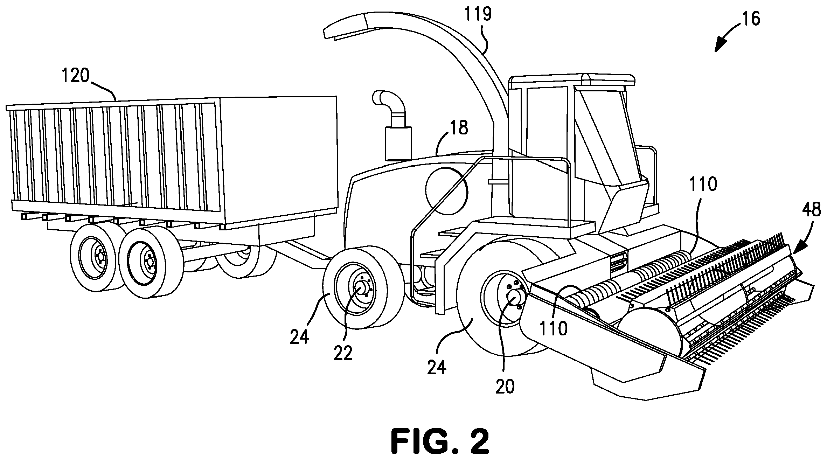

Referring to Fig. 2, a self-propelled harvesting machine 16 is shown. By "self-propelled" it is meant containing its own means of propulsion. The self-propelled harvesting machine 16 will have its own power source 18, such as an engine, and normally will have two spaced apart axles 20 and 22. Each axle 20 and 22 supports a pair of wheels 24. The discussion below will focus on the harvesting machine 10 which is designed to be pulled by a tractor 12. However, the self-propelled unit 16 could be constructed having the same internal components as the harvesting machine 10.

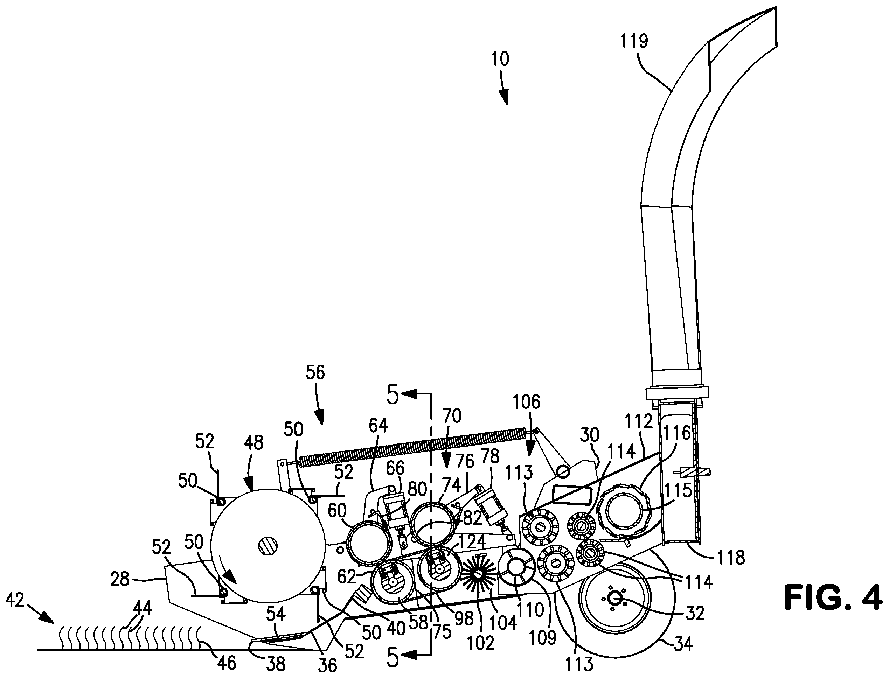

Referring to Figs. 1, and 3 - 5, the harvesting machine 10, which is designed to be pulled behind a tractor 12, has a frame 26 which has a first end 28 and a second end 30. The first end 28 corresponds to the front of the harvesting machine 10 and the second end 32 corresponds to the rear of the harvesting machine 10. The harvesting machine 10 has at least one axle 32, see Fig. 4, having a pair of wheels 34, 34 rotatably secured thereto.

Referring to Fig. 4, the harvesting machine 10 also has a bottom plate 36 positioned adjacent to the first end 28. The bottom plate 36 has a front edge 38 and a rear edge 40. The bottom plate 36 can be formed from a hard, strong material, such as but not limited to: steel, a steel alloy, metal, a metal alloy, etc. The bottom plate 36 can be an arcuate member or be formed having two or more angled sections. The bottom plate 36 is inclined upward towards the rear edge 40. The angle of inclination can range from between about 1° to about 45°. An angle of from between about 10° to about 30° works well. The bottom plate 36 functions to direct cut stems 44 of a plant 42, such as alfalfa, clover, or some other tall grass, into the harvesting machine 10, once each of the stems 42 have been cut or severed at its base 46.

It should be understood that other kinds of plants 42 could also be harvested using the harvesting machine 10 or 16.

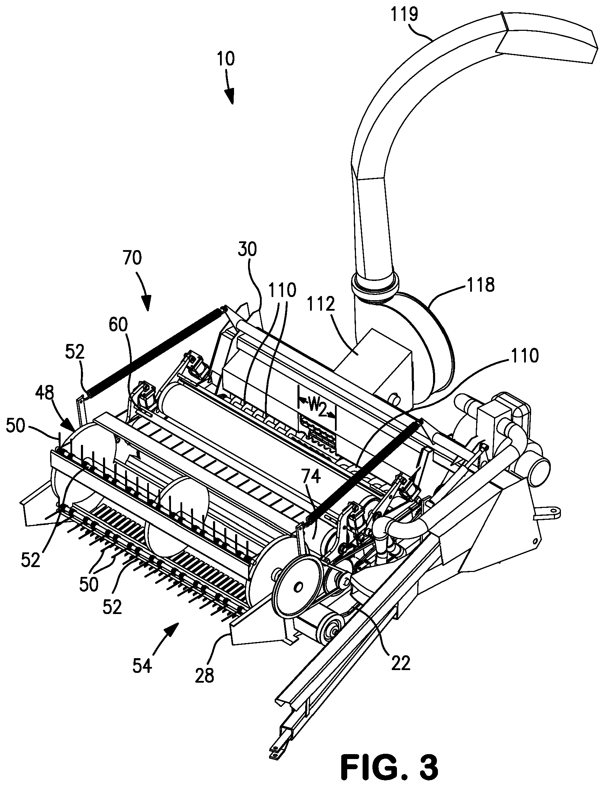

Referring again to Figs. 3 - 5, the harvesting machine 10 also includes a pick-up head 48 rotatably mounted adjacent to the first end 28 of the frame 26. The pick-up head 48 could be designed to pivot, if needed. The pick-up head 48 has at least two spaced apart and outwardly extending finger sets 50, 50. Four finger sets 50, 50, 50 and 50 are shown in Fig.4 with each finger set 50, 50, 50 and 50 spaced approximately 90° apart. When two finger sets 50, 50 are utilized, each finger set 50, 50 can be spaced 180° apart. If three finger sets 50, 50 and 50 are utilized, each finger set 50, 50 and 50 can be spaced 120° apart. Each finger set 50 contains a plurality of fingers 52 spaced apart from one another across the width of the pick-up head 48. The width of the pick-up head 48 can vary. Usually, the width of the pick-up head 48 ranges from between about 183 cm to about 229 cm (about 72 inches to about 90 inches). Desirably, the width of the pick-up head 48 ranges from between about 193 cm to about 218 cm (about 76 inches to about 86 inches). More desirably, the width of the pick-up head 48 is about 208 cm (82 inches). For a pick-up head 48 having an 208 cm (82 inch) width, the number of fingers 52 can range from between about 12 to about 30. Desirably, at least sixteen fingers 52 will span the 208 cm (82 inch) width of the pick-up head 48. More desirably, at least eighteen fingers 52 will span the 208 cm (82 inch width) of the pick-up head 48. The fingers 52 can be equally spaced apart or be arranged at various distances.

The size, shape and dimension of each of the fingers 52 can vary. Normally, each finger 52 can be shaped as an outward extending tine or prong having a length ranging from between about 10 cm to about 30 cm (about 4 to about 12 inches). Desirably, each finger 52 has an outwardly extending length of at least about 15 cm (6 inches). Each finger 52 can include a coil spring section, or some other known configuration, to allow it to bend or flex during operation, see Fig. 4. Each finger 52 can be formed from a variety of strong and sturdy materials. Each finger 52 can be formed from various materials, including but not limited to: metal, a metal alloy, steel, a steel alloy, a composite material, fiberglass, plastic, nylon or some other material. As the pick-up head 48 is rotated in a counterclockwise direction, each finger set 50 will sequentially contact the growing plants 42 in a field. The stem 44 of each plant 42 will contain a relatively high moisture content. By "relatively high moisture content" it is meant at least about 50%. The moisture content of a plant 42 can vary depending upon the age of the plant, the climate, the soil, and the time of year during which the plant 42 is being harvested. For alfalfa, clover and other tall grasses, the moisture content in the stems 44 can range from between about 50% to about 90%. Desirably, the moisture content in the stems 44 will range from between about 55% to about 75%. More desirably, the moisture content in the stems 44 will range from between about 60% to about 70%.

It should be understood that the leaves of an alfalfa plant contain only a small fraction of the moisture present in the plant 42. Therefore, the harvesting machine 10 focuses on reducing the moisture content of the stems 44, versus removing moisture from the leaves.

As the pick-up head 48 rotates counterclockwise, the finger sets 50 will contact the plants 42 and bend and direct the stems 44 downward onto the bottom plate 36. As the pick-up head 48 continues to rotate, the fingers 52 will move the cut stems 44 up the incline of the bottom plate 36.

Still referring to Fig. 4, the harvesting machine 10 further includes a cutting mechanism 54 mounted on the bottom plate 36 below the pick-up head 48. The cutting mechanism 54 can vary in size, shape and design and can be any cutting mechanism known to those skilled in the art. The cutting mechanism 54 could be a single blade or knife. More desirably, the cutting mechanism 54 is an arrangement of multiple cutting blades or knives. For example, the cutting mechanism 54 could include a plurality of reciprocating sickle blades, a plurality of oscillating blades or knives, multiple cutting heads, etc. The cutting mechanism 54 is designed to cut each of the stems 44 at its respective base 46 as the harvesting machine 10 traverses a crop field.

The harvesting machine 10 also includes a first moisture removal mechanism 56 positioned adjacent to the rear edge 40 of the bottom plate 36. The first moisture removal mechanism 56 includes a first suction roll 58 positioned below a first press roll 60, and a moving belt 98 which contacts the outer surface of the first suction roll 58, see Fig. 4. A first nip 62 is formed between the moving belt 98 and the first press roll 60.

The first suction roll 58 can be a drive roll which can be driven by a motor. The first suction roll 58 and the moving belt 98 rotate clockwise while the first press roll 60 rotates counterclockwise. The first press roll 60 is biased against the moving belt 98 and towards the first suction roll 58. The first press roll 60 can be biased against the moving belt 98 using a linkage 64 connected to a hydraulic cylinder 66, as is shown in Fig. 4. Alternatively, the hydraulic cylinder 66 could be replaced with a spring, an air cylinder, a pneumatic cylinder, or by some other mechanism known to those skilled in the art.

Still referring to Fig. 4, the linkage 64 is connected to an end of the first press roll 60. The hydraulic cylinder 66 is fixed between a stationary portion of the frame 26 and the linkage 64. The hydraulic cylinder 66 and linkage 64 can be adjusted to increase or decrease the amount of pressure the first press roll 60 will exert on the moving belt 98. The first press roll 60 is biased towards the belt 98 and the outer surface of the first suction roll 58. The first press roll 60 can be described as a follower roll wherein it follows the rotation of the moving belt 98, just in an opposite direction. The first press roll 60 is in contact with the moving belt 98 except when a moving web 68 of cut stems 44 passes therebetween through the first nip 62.

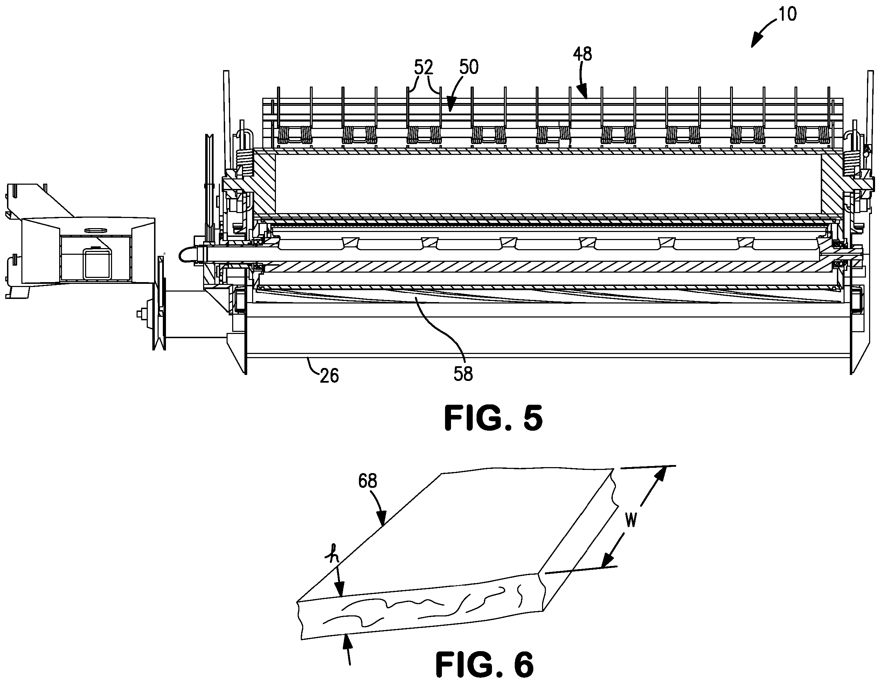

Referring to Figs. 4 and 6, the first nip 62 is formed between the moving belt 98 and the first press roll 60. As the cut stems 44 are directed up the inclined surface of the bottom plate 36, a moving web 68 is formed. The fingers 52 direct the moving web 68 of cut stems 44 through the first nip 62, see Fig. 6. The height of the first nip 62 can vary. The height of the first nip 62 can range from between about 1.3 mm to about 13 mm (about 0.05 inches to about 0.5 inches). Desirably, the height of the first nip 62 can range from between about 2.5 mm to about 10 mm (about 0.1 inches to about 0.4 inches). More desirably, the height of the first nip 62 can range from between about 4 mm to about 9 mm (about 0.15 inches to about 0.35 inches). Even more desirably, the height of the first nip 62 is less than about 7.6 mm (0.3 inches). Most desirably, the height of the first nip 62 is less than about 6.35 mm (0.25 inches).

The first moisture removal mechanism 56 functions to remove from about 1% to about 25% of the moisture present in the stems 44 of the plants 42. In other words, the moisture content of the movable web 68 is being reduced by these percentages. Desirably, the first moisture removal mechanism 56 can remove from between about 5% to about 20% of the moisture present in the stems 44 of the plants 42. More desirably, the first moisture removal mechanism 56 can remove from between about 10% to about 18% of the moisture present in the stems 44 of the plants 42. Even more desirably, the first moisture removal mechanism 56 can remove from between about 10% to about 15% of the moisture present in the stems 44 of the plants 42. Most desirably, the first moisture removal mechanism 56 can remove up to about 15% of the moisture present in the stems 44 of the plants 42.

Still referring to Fig. 6, the moving web 68 can vary in height h and width w. The moving web 68 has a height h which ranges from between about 1.3 mm to about 6.35 mm (about 0.05 inches to about 0.25 inches). Desirably, the moving web 68 has a height h ranging from between about 1.3 mm to about 5 mm (about 0.05 to about 0.20 inches). More desirably, the moving web 68 has a height h ranging from between about 2.5 mm to about 5 mm (about 0.1 to about 0.2 inches). Even more desirably, the moving web 68 has a height h ranging from between about 2.5 mm to about 3.8 mm (about 0.1 to about 0.15 inches). Most desirably, the moving web 68 has a height h of less than about 3.3 mm (0.13 inches).

The moving web 68 has a width w which can be equal to the width of the pick-up head 48. Alternatively, the moving web 68 has a width w which is less than the width of the pick-up head 48. In order to reduce the number of parts needed and to be able to construct the harvesting machine 10 at an economical cost, the moving web 68 usually has a width w which is approximately equal to the width of the pick-up head 48.

Referring again to Figs. 3 - 5, the harvesting machine 10 further includes a second moisture removal mechanism 70 positioned downstream of the first moisture removal mechanism 56. The second moisture removal mechanism 70 includes a second suction roll 72 positioned below a second press roll 74, and the moving belt 98, see Fig. 4. The moving belt 98 surrounds both of the first and second suction rolls, 58 and 72 respectively. The moving belt 98 is continuous and forms a closed loop around the first and second suction rolls, 58 and 72 respectively. A second nip 75 is formed between the moving belt 98 and the second press roll 74. The second suction roll 72 can be a drive roll which can be driven by a motor. Only one of the first and second suction rolls, 58 and 72 respectively, needs to be a drive roll. The second suction roll 72 and the moving belt 98 are rotated clockwise while the second press roll 74 rotates counterclockwise. The second press roll 74 is biased against the moving belt 98 and towards the second suction roll 72. The second press roll 74 can be biased against the moving belt 98 using a linkage 76 connected to a hydraulic cylinder 78, as is shown in Fig. 4. Alternatively, the hydraulic cylinder 78 could be replaced with a spring, an air cylinder, a pneumatic cylinder, or by some other mechanism known to those skilled in the art.

Still referring to Fig. 4, the linkage 76 can be connected to an end of the second press roll 74. The hydraulic cylinder 78 is fixed between a stationary portion of the frame 26 and the linkage 76. The hydraulic cylinder 78 and linkage 76 can be adjusted to increase or decrease the amount of pressure the second press roll 74 will exert on the moving belt 98. The second press roll 74 contacts the moving belt 98 when no crop is passing through the second nip 75. The second press roll 74 can be described as a follower roll wherein it follows the rotation of the moving belt 98 and the second suction roll 72, just in an opposite direction. The second press roll 74 rotates counterclockwise.

Still referring to Fig. 4, the first nip 62 is formed between the moving belt 98 and the first press roll 60. The cut stems 44, in the form of a moving web 68, are directed up the inclined surface of the bottom plate 36 by the fingers 52. The moving web 68 is then directed through the first nip 62, see Fig. 6. The height of the first nip 62 can vary. The height of the first nip 62 can range from between about 1.3 mm to about 13 mm (about 0.05 inches to about 0.5 inches). Desirably, the height of the first nip 62 can range from between about 2.5 mm to about 10 mm (about 0.1 inches to about 0.4 inches). More desirably, the height of the first nip 62 can range from between about 3.8 mm to about 9 mm (about 0.15 inches to about 0.35 inches). Even more desirably, the height of the first nip 62 is less than about 7.6 mm (0.3 inches). Most desirably, the height of the first nip 62 is less than about 6.35 mm (0.25 inches).

The second moisture removal mechanism 70 functions to remove from between about 1% to about 15% of additional moisture from the stems 44 which have passed through the first moisture removal mechanism 56. Desirably, the second moisture removal mechanism 70 can remove from between about 3% to about 15% of the additional moisture present in the stems 44 which have passed through the first moisture removal mechanism 56. More desirably, the second moisture removal mechanism 70 can remove from between about 5% to about 14% of the additional moisture present in the stems 44 which have passed through the first moisture removal mechanism 56. Even more desirably, the second moisture removal mechanism 70 can remove from between about 6% to about 12% of the additional moisture present in the stems 44 which have passed through the first moisture removal mechanism 56. Most desirably, the second moisture removal mechanism 70 can remove up to about 10% of the additional moisture present in the stems 44 which have passed through the first moisture removal mechanism 56.

It should be understood that a third moisture removal mechanism (not shown) could be added downstream of the second moisture removal mechanism 70, if desired. The third moisture removal mechanism could remove from between about 1% to about 10% of the additional moisture present in the stems 44 which have passed through the second moisture removal mechanism 70. Desirably, the third moisture removal mechanism 70 can remove from between about 2% to about 10% of the additional moisture present in the stems 44 which have passed through the second moisture removal mechanism 70. More desirably, the third moisture removal mechanism can remove from between about 3% to about 10% of the additional moisture present in the stems 44 which have passed through the second moisture removal mechanism 70. Even more desirably, the third moisture removal mechanism can remove from between about 4% to about 9% of the additional moisture present in the stems 44 which have passed through the second moisture removal mechanism 70. Most desirably, the third moisture removal mechanism 70 can remove up to about 10% of the additional moisture present in the stems 44 which have passed through the second moisture removal mechanism 70.

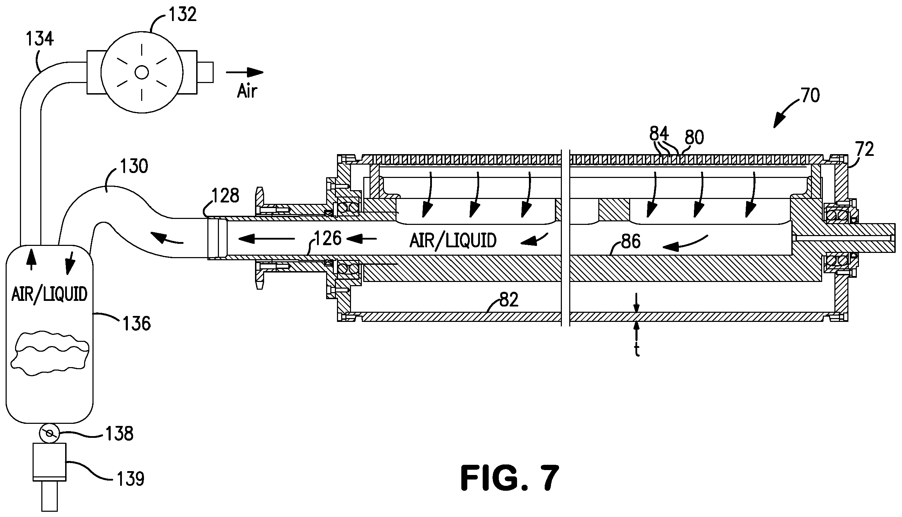

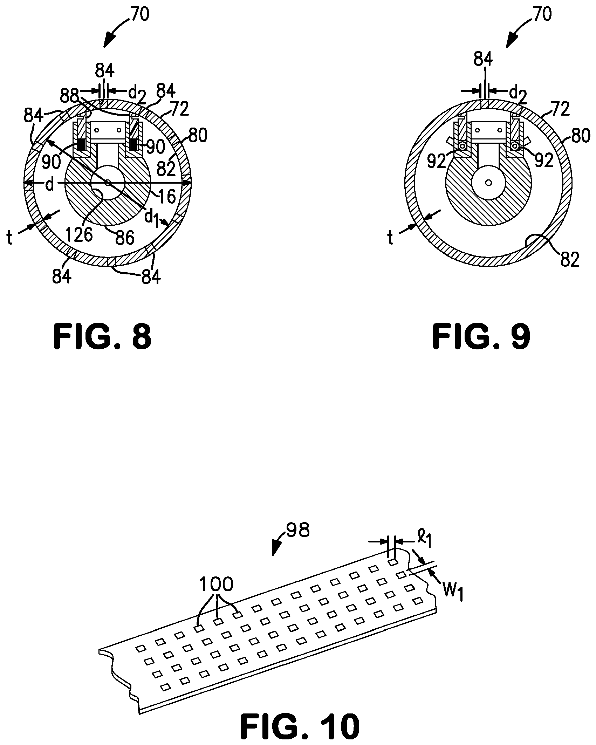

Referring now to Figs. 7 and 8, the first and second suction rolls, 58 and 72 respectively, can be identical in shape, design and construction. Alternatively, each of the first and second suction rolls, 58 and 72 respectively, can be different from one another. In addition, the first and second press rolls, 60 and 74 respectively, can have the same diameter or vary in diameter. The diameter of the second suction roll 72 can be made larger, be the same, or be made smaller than the diameter of the first suction roll 58. Likewise, the diameter of the first press roll 60 can be made larger, be the same, or be made smaller than the diameter of the second press roll 74. Desirably, the diameters of the first and second suction rolls, 58 and 72 respectively, and the diameters of the first and second press rolls, 60 and 74 respectively, are the same.

One will notice that in Fig. 4, the second moisture removal mechanism 70 is inclined relative to the first moisture removal mechanism 56. In other word, the second moisture removal mechanism 70 is at an elevated height relative to the first moisture removal mechanism 56. In addition, the first moisture removal mechanism 56 is positioned in front of and slightly below the second moisture removal mechanism 70. Likewise, the first suction roll 58 is positioned in front of and slightly below the second suction roll 72, and first press roll 60 is positioned in front of and slightly below the second press roll 74. If desired, the first and second suction rolls, 58 and 72 respectively, and the first and second press rolls, 60 and 74 respectively, can be aligned along a common horizontal axis.

Referring to Figs. 7 - 9, the first and second moisture removal mechanisms, 56 and 70 respectively, will be described as being identical in size and overall construction. This means that the fist suction roll 58 is identical to the second suction roll 72, and the first press roll 60 is identical to the second press roll 74. The first suction roll 58 will perform identically to the second suction roll 72. The second suction roll 72 will be explained in detail since it is shown in these figures. The second suction roll 72 is a hollow cylinder or tube which can be formed from various materials. Desirably, the second suction roll 72 is formed from aluminum or an aluminum alloy. The second suction roll 72 has an outside diameter d and an inside diameter d₁, see Fig. 8. The outside diameter d of the second suction roll 72 can range from between about 20 cm to about 30 cm (about 8 inches to about 12 inches). Desirably, the outside diameter d of the second suction roll 72 is greater than about 23 cm (9 inches). More desirably, the outside diameter d of the second suction roll 72 ranges from between about 23 cm to about 25 cm (about 9 inches to about 10 inches). Even more desirably, the outside diameter d of the second suction roll 72 is about 24 cm (9.5 inches).

It should be understood that the above second suction roll 72 diameters are for a harvesting machine 10 with cutting widths of about 203 cm (80 inches). As the cutting width of the harvesting machine 10 increases, the diameters of the first and second suction rolls, 58 and 72 diameter respectively, will also increase. A typical rule of thumb for suction roll diameter is to use a 10/1 ratio as a minimum (for example, an 203 cm (80 inch) long suction roll would be have an 20 cm (8 inch) diameter). For the self-propelled harvesting machine 16, the cutting widths can go up to about 6 m (20 feet (240 inches)) or greater. In these types of harvesting machines 16, the diameters of the first and second suction rolls, 58 and 72 respectively, could be about 61 cm (24 inches) or greater.

The inside diameter d₁ of the second suction roll 72 can range from between about 2.5 mm to about 7.6 mm (about 0.1 inches to about 0.3 inches) less than the outside diameter d. Desirably, the inside diameter d₁ of the second suction roll 72 ranges from between about 20 cm to about 30 cm (about 7.7 inches to about 11.9 inches). More desirably, the inside diameter d₁ of the second suction roll 72 is greater than about 22 cm (8.7 inches).

The thickness t of the second suction roll 72 can range from between about 2.5 mm to about 7.6 mm (about 0.1 inches to about 0.3 inches), see Fig. 8. Desirably, the thickness t of the second suction roll 72 ranges from between about 3.8 mm to about 6.35 mm (about 0.15 inches to about 0.25 inches). More desirably, the thickness t of the second suction roll 72 ranges from between about 4.6 mm to about 6.35 mm (about 0.18 inches to about 0.25 inches). Even more desirably, the thickness t of the second suction roll 72 ranges from between about 5 mm to about 6.35 mm (about 0.2 inches to about 0.25 inches).

The second suction roll 72 has an exterior surface 80, an interior surface 82, and a circumference. A plurality of apertures 84 are formed through the thickness t of the hollow, second suction roll 72. The apertures 84 can vary in size and/or diameter. Desirably, each of the plurality of apertures 84 has a circular configuration. It is also desirable that each of the plurality of apertures 84 has the same diameter. Each of the plurality of apertures 84 has a diameter d₂. The diameter d₂ is relatively small and can vary. The diameter d₂ of each of the plurality of apertures 84 can range from between about 1.3 mm to about 6.35 mm (about 0.05 inches to about 0.25 inches). Desirably, the diameter d₂ of each of the plurality of apertures 84 ranges from between about 2.5 mm to about 5 mm (about 0.1 inches to about 0.2 inches). More desirably, the diameter d₂ of each of the plurality of apertures 84 ranges from between about 3.8 mm to about 5 mm (about 0.15 inches to about 0.2 inches). Even more desirably, the diameter d₂ of each of the plurality of apertures 84 is less than about 6.35 mm (0.25 inches).

If desired, some of the plurality of apertures 84 could be formed to have different diameters but this would increase the cost of manufacturing the second suction roll 72.

Still referring now to Figs. 7 - 9, a stationary member 86 is positioned within the hollow, second suction roll 72. The stationary member 86 can vary in construction. The stationary member 86 includes a pair of seals 88, 88 arranged to form an opening into a center portion of the stationary member 86. The size, shape and design of each of the pair of seals 88, 88 can vary. Each of the pair of seals 88, 88 is movable and each is biased outward against the interior surface 82 of the hollow, second suction roll 72. Each of the pair of seals 88, 88 can be biased outward against the interior surface 82 of the hollow, second suction roll 72 by a spring 90. Alternatively, each of the pair of seals 88, 88 can be biased outward against the interior surface 82 of the hollow, second suction roll 72 by a pair of air load tube 92, 92, see Fig. 9. Furthermore, each of the pair of seals 88, 88 can be biased outward against the interior surface 82 of the hollow, second suction roll 72 by some other mechanism known to those skilled in the art.

The pair of seals 88, 88 can be formed from various materials. An excellent material from which to form the pair of seals 88, 88 is a high-strength, resilient synthetic polymer. A particular polymer from which the pair of seals 88, 88 can be formed is nylon. By "nylon" it is meant any of a family of high-strength, resilient synthetic polymers containing recurring amide groups. Various types of nylon can also be used since seals containing nylon tend to be strong, resilient and pliable. The pair of seals 88, 88 could also be formed from other materials known to those skilled in the art.

The purpose of the pair of seals 88, 88 is to form a small zone of negative pressure within the stationary member 86. The stationary member 86 is designed to pull a vacuum or negative pressure so that moisture, in the form of a liquid, can be drawn out of the stems 44 in the moving web 68 and be removed through the second suction roll 72 and the stationary member 86. The stationary member 86 can be constructed to pull a negative pressure ranging from between about -34 kPa to about -69 kPa (about -5 pounds per square inch (psi) to about -10 psi). Desirably, the stationary member 86 should be built and designed to pull a negative pressure ranging from between about -41 kPa to about -62 kPa (about -6 psi to about -9 psi). More desirably, the stationary member 86 should be built and designed to pull a negative pressure of at least -48 kPa (-7 psi). Even more desirably, the stationary member 86 should be built and designed to pull a negative pressure of at least -55 kPa (-8 psi). Most desirably, the stationary member 86 should be built and designed to pull a negative pressure of at least -62 kPa (-9 psi).

Returning again to Fig. 4, as stated above, the first and second press rolls, 60 and 74 respectively, are identical in diameter, design, construction and function. The diameter of the second press roll 60 can be made larger, be made the same size, or be made smaller than the diameter of the first press roll 74. Desirably, the diameter of the first and second press rolls, 60 and 74 respectively, are the same.

Still referring to Fig. 4, for ease with understanding this invention, the first and second press rolls, 60 and 74 respectively, will be identical in size and appearance. The second press roll 74 will be explained in detail. The first press roll 60 will perform identically to the second press roll 74. The second press roll 74 can be formed from various materials. Desirably, the second press roll 74 is a steel roll coated with rubber. The second press roll 74 can be biased against the moving belt 98 and towards the second suction roll 72 by various means, such as by a mechanical device. The mechanical device can be a spring, a hydraulic cylinder, a pneumatic cylinder, by air pressure, by a mechanical/electrical device, or by some other means known to those skilled in the art. As explained above, a linkage 76 is connected to a hydraulic cylinder 78 and the hydraulic cylinder 78 is used to bias the second press roll 74 against the moving belt 98. One end of the hydraulic cylinder 78 can be secured to a portion of the frame 26 and the opposite end of the hydraulic cylinder 78 is attached to the linkage 76. The linkage 76 is connected to an end of the second press roll 74. One can adjust the amount of pressure the second press roll 74 will apply against the moving belt 98 and towards the second suction roll 72 by adjusting the setting of the hydraulic cylinder 78 and/or adjusting the linkage 76.

The second press roll 74 can have a smaller diameter, the same diameter, or a larger diameter than the second suction roll 72. Desirably, the second press roll 74 will have the same diameter or a larger diameter than the second suction roll 72. More desirably, the second press roll 74 has a larger diameter than the second suction roll 72. For example, if the second suction roll 72 has a diameter d of 24 cm (9.5 inches), the second press roll 74 can have a diameter ranging from about 24.4 cm to about 25.4 cm (about 9.6 to about 10 inches). By constructing the second press roll 74 to have an equal or slightly larger diameter than the second suction roll 72, one can better control the amount of pressure the second press roll 74 will exert on the moving belt 98.

Desirably, the first and second press rolls, 60 and 74 respectively, and the first and second suction rolls, 58 and 72 respectively, will have the same length so as to easily fit into the harvesting machine 10. Each of the first and second press rolls, 60 and 74 respectively, can be adjusted to exert a pressure ranging from between about 8.7 to about 17.5 N/mm (about 50 pounds per linear inch (pli) to about 100 pli) against the moving belt 98 and towards each of the first and second suction rolls, 58 and 72 respectively. Desirably, each of the first and second press rolls, 60 and 74 respectively, can be adjusted to exert a pressure ranging from between about 10 N/mm to about 16 N/mm (about 60 pli to about 90 pli) against the moving belt 98. More desirably, each of the first and second press rolls, 60 and 74 respectively, can be adjusted to exert a pressure ranging from between about 11 N/mm to about 15 N/mm (about 65 pli to about 85 pli) against the moving belt 98. Even more desirably, each of the first and second press rolls, 60 and 74 respectively, can be adjusted to exert a pressure of at least 12 N/mm (70 pli) against the moving belt 98. Most desirably, the each of first and second press rolls, 60 and 74 respectively, can be adjusted to exert a pressure of at least 13 N/mm (75 pli) against the moving belt 98.

The press action between the first suction roll 58, the moving belt 98 and the first press roll 60, and the press action between the second suction roll 72, the moving belt 98 and the second press roll 74, squeezes the plant stems 44. This squeezing action, in combination with the rolling action of the moving belt 98 against the first press roll 60 and the rolling action of the moving belt 98 against the second press roll 74 squeezes the moisture (liquid) out of the plant stems 44. The released liquid is then drawn into the interior of the first and second suction rolls, 58 and 72 respectively.

Referring now to Figs. 4 and 10, the moving belt 98 forms a continuous, closed loop around both the first and second suction rolls, 58 and 72 respectively. The moving belt 98 functions to move the moving web 68 of cut stems 44 through the first and second moisture removal mechanisms, 56 and 70 respectively. The orientation of the moving belt 98, located between the first and second suction rolls, 58 and 72 respectively, can be at a slight incline. Alternatively, the moving belt 98 can be aligned a horizontally axis. The moving belt 98 is movable in a clockwise direction and is driven by at least one of the first or second suction rolls, 58 or 72 respectively.

The moving belt 98 can be formed from various materials. For example, the moving belt 98 can be formed from plastic, urethane, polypropylene, polyethylene, or any material known to those skilled in the art. Additionally, the moving belt 98 could be formed by weaving fine metal or steel wires into a screen. The moving belt 98 could also be formed from thin strands of a thermoplastic or a composite material which are formed into a screen. Furthermore, the moving belt 98 could also be formed from a corrosion resistant material, such as stainless steel.

The moving belt 98 contains a plurality of apertures 100 formed therethrough. The apertures 100 can be relatively small and vary in size, shape and dimensions. The plurality of apertures 100 can be of the same size or be of a different size. Normally, all of the apertures 100 are of the same size and shape. The geometry of the apertures 100 can vary. For example, the apertures 100 can be rectangular, square or circular in shape. Additionally, the apertures 100 could have an irregular configuration. The apertures 100 can be formed when the belt 98 is constructed. Alternatively, the apertures 100 can be formed after the belt 98 is constructed, such as by punching the apertures 100.

The apertures 100 can form an open area of from between about 20% to about 50% in the surface area of the moving belt 98. For example, the apertures 100 can form about 20%, about 25%, about 30%, about 35%, about 40%, about 45% or about 50% open area in the surface of the moving belt 98. For an aperture 100 having a circular configuration, each aperture 100 can have a diameter ranging from between about 1.3 mm to about 5 mm (about 0.05 inches to about 0.2 inches). Desirably, a circular aperture 100 can have a diameter ranging from between about 2 mm to about 3.8 mm (about 0.08 inches to about 0.15 inches). More desirably, a circular aperture 100 can have a diameter ranging from between about 2.5 mm to about 3.3. mm (about 0.1 inches to about 3.3 mm (0.13 inches). Even more desirably, a circular aperture 100 can have a diameter of less than about 3.6 mm (0.14 inches). Most desirably, a circular aperture 100 can have a diameter of about 3 mm (0.12 inches).

Referring again to Fig. 10, for an aperture 100 having a rectangular configuration, each aperture 100 can have a length l₁ ranging from between about 0.6 mm to about 0.9 mm (about 0.025 inches to about 0.035 inches), and a width w₁ ranging from about 0.25 mm to about 0.5 mm (about 0.01 inches to about 0.02 inches). Desirably, for an aperture 100 having a rectangular configuration, each aperture 100 can have a length l₁ ranging from between about 0.7 mm to about 0.8 mm (about 0.027 inches to about 0.033 inches), and a width w₁ ranging from about 0.3 mm to about 0.5 mm (about 0.012 inches to about 0.019 inches). More desirably, for an aperture 100 having a rectangular configuration, each aperture 100 can have a length l₁ ranging from between about 0.7 mm to about 0.8 mm (about 0.028 inches to about 0.032 inches), and a width w₁ ranging from about 0.43 mm to about 0.46 mm (about 0.017 inches to about 0.018 inches). Even more desirably, each rectangular shaped aperture 100 can have a length l₁ of about 0.8 mm (0.032 inches) and a width w₁ of about 0.46 mm (0.018 inches). A preferred size is an aperture 100 having a length l₁ of about 0.76 mm (0.03 inches), and a width w₁ of about 0.25 mm (0.01 inches).

It should be understood that each of the plurality of apertures 100 formed in the moving belt 98 is at least about 25% smaller in area than each of the apertures 84 formed in the second suction roll 72. Desirably, each of the plurality of apertures 100 formed in the moving belt 98 is at least about 30% smaller in area than each of the apertures 84 formed in the second suction roll 72. More desirably, each of the plurality of apertures 100 formed in the belt 98 is at least about 40% smaller in area than each of the apertures 84 formed in the second suction roll 72. Even more desirably, each of the plurality of apertures 100 formed in the belt 98 is at least about 50% smaller in area than each of the apertures 84 formed in the second suction roll 72. Most desirably, each of the plurality of apertures 100 formed in the belt 98 is at least about 60% smaller in area than each of the apertures 84 formed in the second suction roll 72. This is important, because the plurality of apertures 100 formed in the moving belt 98 will prevent debris from the cut stems 44 from entering the apertures 84 formed in the second suction roll 72. By forming each of the apertures 100 to a smaller size than the apertures 84, one can be assured that no large particles of debris will enter the apertures 84 formed in the second suction roll 72, and fowl them up.

It should be understood that the first suction roll 58 is identical in construction to the second suction roll 72, and therefore no debris will enter the apertures formed in the first suction roll 58 either.

The moving belt 98 is made movable by spanning a portion of the circumference of the first and second suction rolls, 58 and 72 respectively. Only one of the first and second suction rolls, 58 and 72 need be a driven roll. Desirably, the moving belt 98 will span at least about 180° of the circumference of each of the first and second suction rolls, 58 and 72 respectively. More desirably, the belt 98 will span 180° of the circumference of each of the first and second suction rolls, 58 and 72 respectively.

It should be understood that each of the plurality of apertures 100 formed in the belt 98 is smaller than each of the plurality of apertures 84 formed in the second suction roll 72. This is an important feature for it assures that none of the stems 44 or portions thereof will be sucked into the suction roll 72 through the apertures 84.

Referring again to Fig. 4, one can see that the second nip 75 is formed between the second press roll 74 and the moving belt 98. The size of this second nip 75 can vary. The size of the second nip 75 can range from between about 1.3 mm to about 13 mm (about 0.05 inches to about 0.5 inches). Desirably, the size of the second nip 75 can range from between about 2.5 mm to abput 10 mm (about 0.1 inches to about 0.4 inches). More desirably, the size of the second nip 75 can range from between about 3.8 mm to about 9 mm (about 0.15 inches to about 0.35 inches). Even more desirably, the size of the second nip 75 is less than about 7.6 mm (0.3 inches). Most desirably, the size of the second nip 75 is less than about 6.35 mm (0.25 inches).

The moving belt 98 functions as a conveyor for moving the moving web 68 of cut stems 44 through the first and second nips, 62 and 75 respectively. As the moving web 68 passes through the second nip 75, the moisture content in the cut stems 44 is lowered and reduced. A standing crop of alfalfa, and certain tall grasses, in a field can have a **relative high moisture content. By a "relative high moisture content" it is meant a** moisture content of at least about 50%. Desirably, a standing crop of alfalfa can have a moisture content ranging from between about 50% to about 90%. Depending upon the time of year, the soil makeup, the time of day when the alfalfa is being harvested, the kind of weather the alfalfa is being harvested in, the time of year in which the alfalfa is being harvested, the variety of alfalfa, the geographical location of the farm, etc., a standing crop of alfalfa in a field can have a moisture content ranging from between about 50% to about 85%. Desirably, a standing crop of alfalfa in a field can have a moisture content ranging from between about 50% to about 80%. More desirably, a standing crop of alfalfa in a field can have a moisture content ranging from between about 50% to about 75%. Even more desirably, a standing crop of alfalfa in a field can have a moisture content of at least about 55%. Most desirably, a standing crop of alfalfa in a field can have a moisture content of at least about 60%.

By harvesting the alfalfa crop and certain tall grasses with the harvesting machine 10 or 16, one can lower or reduce the moisture content in the cut stems 44 from between about 10% to about 50%. Desirably, by harvesting the alfalfa and certain tall grasses with the harvesting machine 10 or 16, one can lower or reduce the moisture content in the cut stems 44 from between about 15% to about 45%. More desirably, by harvesting the alfalfa and certain tall grasses with the harvesting machine 10 or 16, one can lower or reduce the moisture content in the cut stems 44 from between about 20% to about 40%. Even more desirably, by harvesting the alfalfa and certain tall grasses with the harvesting machine 10 or 16, one can lower or reduce the moisture content in the cut stems 44 by at least about 30%. Most desirably, by harvesting the alfalfa and certain tall grasses with the harvesting machine 10 or 16, one can lower or reduce the moisture content in the cut stems 44 by at least about 25%. Even more desirably, by harvesting the alfalfa and certain tall grasses with the harvesting machine 10 or 16, one can lower or reduce the moisture content in the cut stems 44 by at least about 20%.

The first moisture removal mechanism 56 can remove at least about 20% of the moisture content in the cut stems 44. Desirably, the second moisture removal mechanism 70 can remove at least about 10% of the additional moisture content in the cut stems 44. More desirably, the first and second moisture removal mechanisms, 56 and 70 respectively, can remove at least about 30% of the moisture content in the cut stems 44.

The moisture contained in the stems 44 of an alfalfa plant 42 and the moisture contained in the stems 44 of certain tall grasses can be removed by the harvesting machine 10 or 16 in the form of a liquid. The leaves of the alfalfa plant 42 and the tips of certain tall grasses usually contain only a very small amount of moisture. Because of this, the harvesting machine 10 or 16 extracts moisture from the cut stems 44 and not from the leaves of the plant 42. The liquid removed from the cut stems 44 has a nutritional value. Therefore, it is advantageous to capture this liquid and use it as a feed supplement, as a fertilizer, or for some other purpose. The liquid that is removed could also be deposited back onto the field from which the alfalfa was harvested and be used as a fertilizer. By "fertilizer" it is meant any of a large number of natural and synthetic materials, including manure and nitrogen, phosphorous, and potassium compounds, spread on or worked into soil to increase its capacity to support plant growth.

Still referring to Fig. 4, a rotatable brush 102 is shown having a plurality of outwardly extending bristles 104. The rotary brush 102 is located downstream of the second suction roll 72 and contacts the moving belt 98. The rotatable brush 102 extends the full width of the moving belt 98. The rotatable brush 102 rotates clockwise. The diameter of the rotatable brush 102 can vary, as well as the material from which the brush 102 is constructed. The bristles 104 should be formed from a stiff and flexible material. The bristles 104 can be formed from plastic, thermoplastic, nylon, or any other material known to those skilled in the art.

The rotatable brush 102 can have a diameter ranging from between about 13 cm to about 30 cm (about 5 inches to about 12 inches). Desirably, the diameter of the rotatable brush 102 will range from between about 15 cm to about 25 cm (about 6 inches to about 10 inches). More desirably, the diameter of the rotatable brush 102 will range from between about 15 cm to about 20 cm (about 6 inches to about 8 inches). Even more desirably, the diameter of the rotatable brush 102 will be less than about 24 cm (9.5 inches). Most desirably, the diameter of the rotatable brush 102 will be at about 18 cm (7 inches).

The bristles 104 on the rotatable brush 102 contact the moving belt 98 and function to remove small debris, such as leaves, stems, etc. that may have become lodged in the apertures 100 of the moving belt 98. The bristles 104 of the rotatable brush 102 also contact the leading edge of an auger housing 109, which will be explained below.

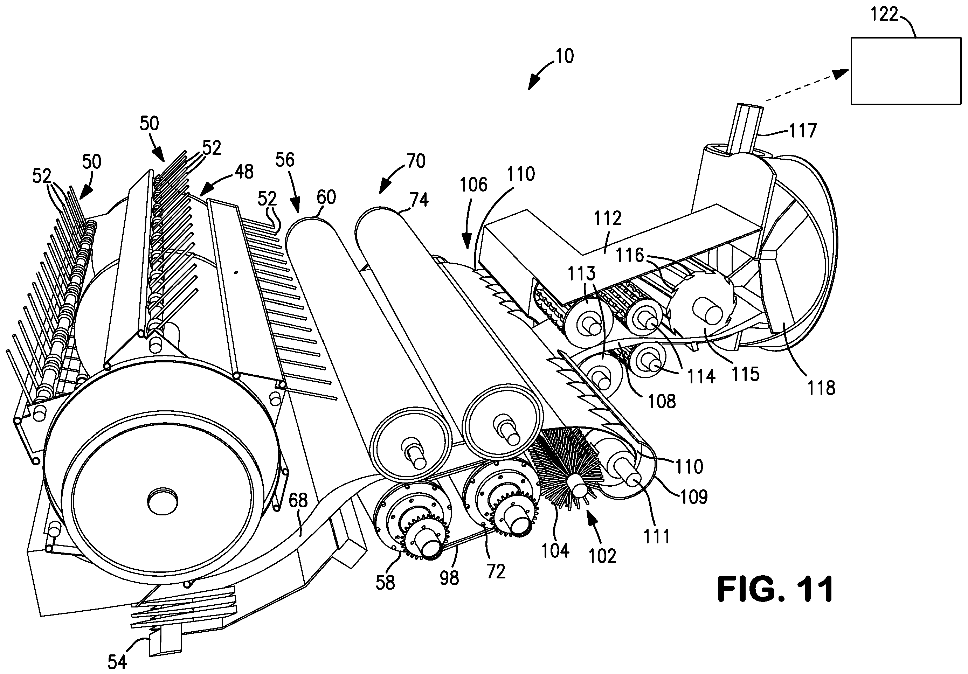

Referring now to Figs 3 and 11, a crop converging mechanism 106 is located downstream of the second moisture removal mechanism 70. The crop converging mechanism 106 reduces the width of moving web 68 into a narrow ribbon 108 having a width w₂, see Fig. 3. The narrow ribbon 108 has a width w₂ of about 76 cm (30 inches) or less. Desirably, the ribbon 108 has a width w₂ of about 71 cm (28 inches) or less. More desirably, the narrow ribbon 108 has a width w₂ of about 66 cm (26 inches) or less. Even more desirably, the narrow ribbon 108 has a width w₂ of about 61 cm (24 inches). The crop converging mechanism 106 can vary in construction and size.

As depicted in Fig. 11, the crop converging mechanism 106 includes an auger housing 109 in which a pair of rotatable augers 110, 110 are housed. The pair of rotatable augers 110, 110 is aligned on a common shaft 111. Each of the pair of augers 110, 110 is aligned on a common axis. One auger 110 can be a right-handed auger and the other auger 110 can be a left-handed auger. As the shaft 111 rotates, the pair of augers 110, 110 function to reduce the width of the moving web 68. The pair of augers 110, 110 can forcibly reduce the moving web 68 into a narrow ribbon 108 having a desired width w₂. One or more moving belts or some other kind of mechanical equipment, known to those skilled in the art, could also be used in place of the pair of augers 110, 110 to reduce the width of the moving web 68 into a narrow ribbon 108 having a width w₂.

Referring again to Figs. 1 and 11, the harvesting machine 10 or 16 further includes a conveyor chute 112 positioned downstream of the crop converging mechanism 106. The conveyor chute 112 is sized to handle the narrow ribbon 108 of cut stems 44. The conveyor chute 112 can be constructed of various materials. Typical materials include steel, a steel alloy, metal, a metal alloy or any other material known to those skilled in the art. The conveyor chute 112 can house a first pair of feed rolls 113, 113, a second pair of feed rolls 114, 144, if needed, and a chopper 115. The first and second pairs of feed rolls 113, 113 and 114, 114 functions to route the narrow ribbon 108 of cut stems 44 to a chopper 115. The chopper 115 is positioned downstream of the crop converging mechanism 106 and towards the opposite end of the conveyor chute 112. The chopper 115 can be a rotary knife or other kind of cutting apparatus known to those skilled in the art. The chopper 115 can include several cutting blades 116. The chopper 115 is designed to chop the narrow ribbon 108 of cut stems 44 into small pieces 117. A blower 118 is positioned downstream of the chopper 115 and is designed to blow or move the small pieces 117 up and through a spout 119, see Fig. 1. The spout 119 can route the small pieces 117 into a storage wagon 120 for transport to a storage facility 122, such as a silo or grain bin, see Fig. 11.

Returning again to Fig. 4, a doctor blade 124 is positioned adjacent to the exterior surface of the second press roll 74 and downstream of the second nip 75. The doctor blade 124 can be formed from various materials. Usually, the doctor blade 124 is formed from steel or metal. The doctor blade 124 can physically contact or touch the exterior surface of the second press roll 74 or be slightly removed from the exterior surface 80. Desirably, the doctor blade 124 physically contacts the exterior surface of the second press roll 74. Alternatively, the doctor blade 124 is situated within about 3.2 mm (0.125 inches) of the exterior surface of the second press roll 74. The doctor blade 124 can vary in configuration and thickness but should generally be a rectangular blade equivalent to the blade on a putty knife. The thickness of the doctor blade 124 can range from between about 2.5 mm to about 5 mm (about 0.10 inches to about 0.20 inches). The doctor blade 124 is located downstream of the second nip 75. The doctor blade 124 is a stationary member which functions to remove any stems 44, particles, debris or portions thereof, that may cling to the exterior surface of the second press roll 74. In essence, the doctor blade 124 keeps the exterior surface of the second press roll 74 clean and free of particles and debris. As depicted, the doctor blade 124 can be positioned from about 5 cm to about 10 cm (about 2 inches to about 4 inches) above the moving belt 98.

Referring now to Figs. 7, 8, and 12, the second suction roll 72 includes a stationary member 86 having a central bore 126 which runs along the length of the stationary member 86. The central bore 126 has an opening 128 formed at one end. A first conduit or hose 130 is connected to the opening 128. The first conduit 130 can vary in diameter. The diameter of the first conduit 130 can range from between about 5 cm to about 10 cm (about 2 inches to about 4 inches). A diameter of about 5 cm (2 inches) works well for the first conduit 130. The first conduit 130 connects the central bore 126 of the stationary member 86 to a storage vessel 136. Moisture, in the form of a liquid, is removed from the cut stems 44 of the plants 42 and is routed through the central bore 126 of the stationary member 86. From here, liquid and air passes through the opening 128 and through the first conduit 130 to the storage vessel 136. The storage vessel 136 removes the liquid from the air. A second conduit 134 connects the storage vessel 136 to a vacuum pump 132. The diameter of the second conduit 134 can range from between about 5 cm to about 10 cm (about 2 inches to about 4 inches). A diameter of about 5 cm (2 inches) works well for the second conduit 134.

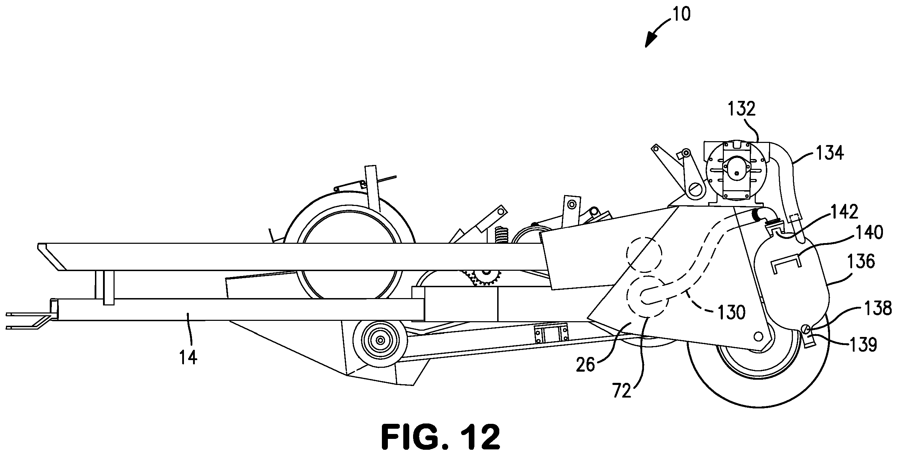

Referring to Fig. 12, the vacuum pump 132 is located downstream of the storage vessel 136 via the second conduit 134. The vacuum pump 132 is designed to pull a negative pressure value. The vacuum pump 132 can be selected to pull a required amount of vacuum. One skilled in the art can determine the amount of vacuum which the vacuum pump 132 needs to pull depending on the size of the harvesting machine 10. It has been determined that the size of the vacuum pump 132 can vary, as well as the flow rate and the horsepower (HP) required to operate the vacuum pump 132. The horsepower can be as high as 224 kW (300 HP) depending on the size of the harvesting machine 10. The flow rating for the vacuum pump 132 can be as high as 1.4 m³/s (3,000 cubic feet per minute (cfm)) at 40.6-47.4 kPa (12-14 inches of mercury (Hg)) for a harvesting machine 10 designed to have a harvest swath of about 4.6 m (15 feet).

The storage vessel 136 can vary in size, shape and configuration. The storage vessel 136 can be formed from various materials, including but not limited to: fiberglass, plastic, thermoplastics, glass, metal, tin, a composite material, or any other material known to those skilled in the art. A desired material is plastic. The storage vessel 136 can hold varying quantities of liquid. One or more storage vessels 136 can be secured to the harvesting machine 10. The storage vessel 136 can be secured to the frame 26. The storage vessel 136 could be removable, if desired. Desirably, the storage vessel 136 is permanently secured to the frame 26.

The storage vessel 136 can vary in the amount of liquid it can hold. The storage vessel 136 could be sized to hold from between about 4 l to about 380 l (about 1 gallon to about 100 gallons) of liquid. Desirably, the storage vessel 136 can hold at least about 19 l (5 gallons). More desirably, the storage vessel 136 can hold at least about 38 l (10 gallons). Even more desirably, the storage vessel 136 can hold at least about 57 l (15 gallons). Most desirably, the storage vessel 136 can hold from between about 19 l to about 190 l (about 5 gallons to about 50 gallons). The storage vessel 136 is equipped with a drain valve 138 and a drain pump 139. The drain valve 138 can be any kind or type of drain valve known to those skilled in the art. A fluid level sensor (not shown) can be positioned in the storage vessel 136. The fluid level sensor can be set to a predetermined level, and when the fluid in the storage vessel 136 reaches this level, the fluid level sensor will trigger the drain valve 138 to open. When this occurs, the drain pump 139 will pump the fluid out of the storage vessel 136. Desirably, the drain valve 138 and the drain pump 139 are located at or near the bottom of the storage vessel 136.

The storage vessel 136 can be securely affixed to the frame 26 by a mechanical fastener. Alternatively, the storage vessel 136 can have a unique shape which permits it to be snugly fitted into a receiving area formed on the frame 26. The storage vessel 136 can contain a handle 140, if desired.

It should be understood that the storage vessel 136 is designed to temporarily retain the liquid removed from the stems 44 of the plants 42 while the harvesting machine 10 traverses a field. Since the liquid has a nutritional value, it can be later processed to form a liquid supplement which can then be fed to live stock or humans. Alternatively, the liquid can be mixed with other feed and be fed to animals, such as milking cows. Another option is to return the liquid to the field where it would serve as a fertilizer.

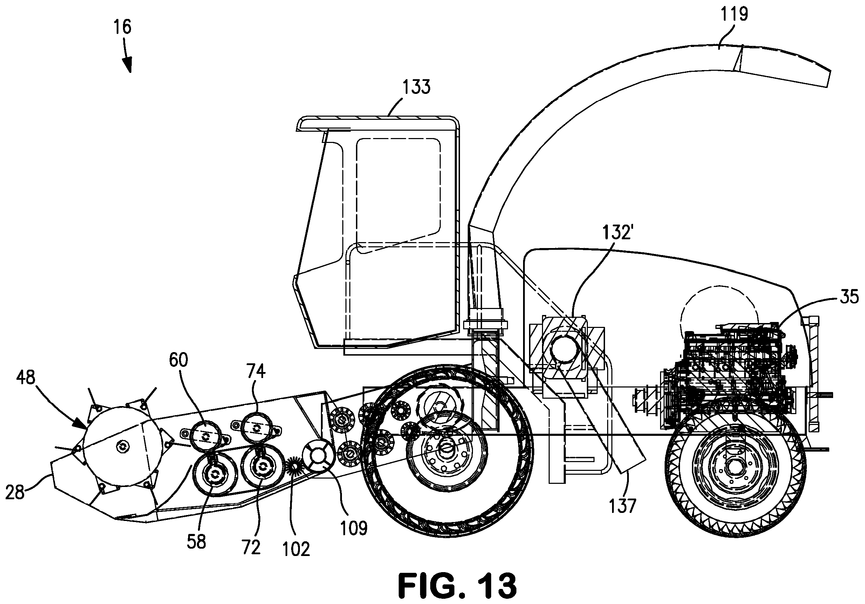

Referring now to Fig. 13, an alternative arrangement is shown using a vacuum pump 132' which is capable of handling a liquid, instead of air, and can deposit the removed plant moisture directly onto the ground. No storage vessel 136 is needed when utilizing the vacuum pump 132'. The vacuum pump 132' is mounted behind a tractor cab 133 and close to an engine 135 so that it can easily be driven by the engine 135. An outlet conduit 137 is connected to the vacuum pump 132 and extends downward toward the ground. The outlet conduit 137 can be angled downward and/or backward away from the tractor cab 133, if desired. The diameter of the outlet conduit 137 can vary. The outlet conduit 137 can have a diameter ranging from between about 5 cm to about 30 cm (about 2 inches to about 12 inches). The outlet conduit 137 is capable of depositing the removed moisture from the plants 42 directly onto the ground so that the liquid can serve as fertilizer for future crops.

The alternative vacuum pump 132' can be a positive displacement vane or lobe style pump. The alternative vacuum pump 132' can also be a centrifugal type pump.

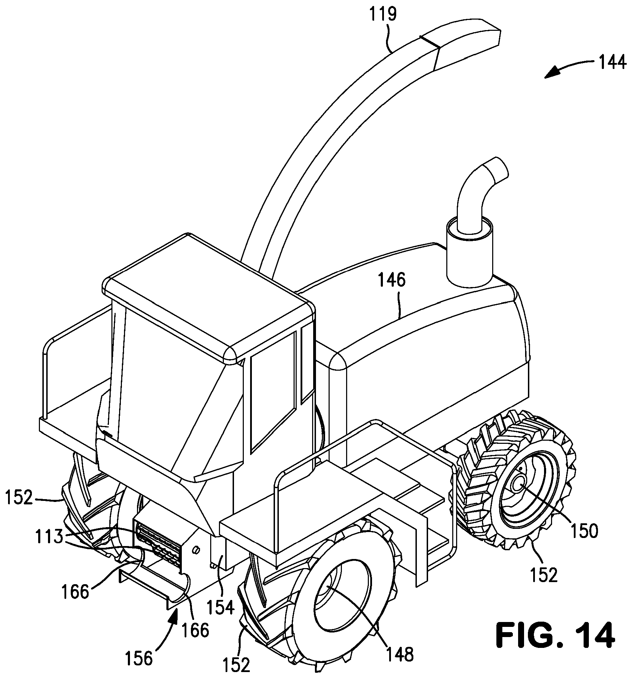

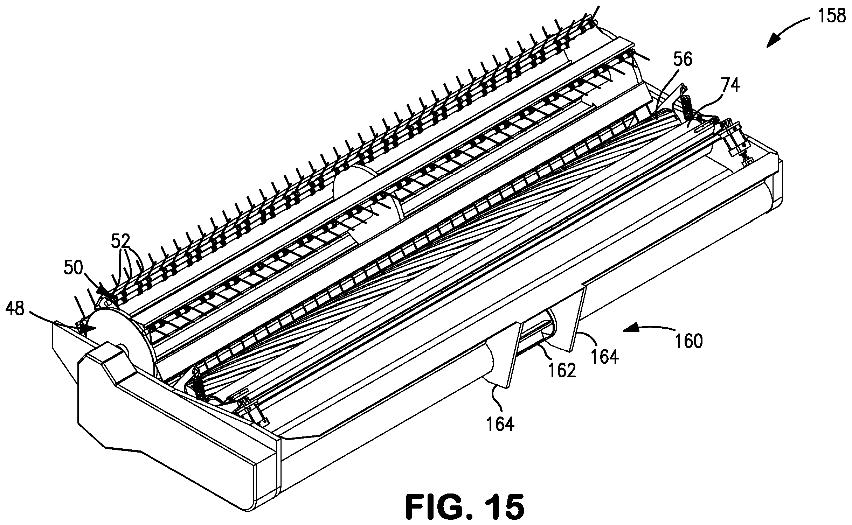

Referring to Fig. 14, a self-propelled unit 144 is shown. By "self-propelled" it is meant containing its own means of propulsion. The self-propelled unit 144 will have its own power source 146, such as an engine, and normally will have two spaced apart axles 148 and 150. Each axle 148 and 150 supports a pair of wheels 152. The self-propelled unit 144 has a front end 154 which contains an attachment mechanism 156. The attachment mechanism 156 can vary in size, shape and design. The attachment mechanism 156 can be a pivot type joint or some other type of device known to those skilled in the art. The self-propelled unit 144 should also include a lift device (not shown) for allowing the attachment mechanism 156 to raise or lower a header 158, see Fig. 15, which can be removably attached to it.

Located rearward or behind the attachment mechanism 156 is a first pair of feed rolls 113, 113. All the mechanisms shown in Fig. 11, to the right of the first pair of feed rolls 113, 113 would be contained in the self-propelled unit 144. This includes structure identical to or similar to the conveyor chute 112, the second pair of feed rolls 114, 114 (if needed), the chopper 115, etc. which can accomplish the same function as the conveyor chute 112 and the blower 118.

Referring now to Fig. 15, the header 158 is shown having a connector 160. The connector 160 is sized, shaped and configured to mate with and/or engage with the attachment mechanism 156. Various types of connectors 160, known to those skilled in the art, can be utilized. In the example shown, the connector 160 includes a cylindrical tube 162 which is horizontally aligned. The cylindrical tube 162 is positioned between a pair of side support plates 164, 164. The pair of side support plates 164, 164 are designed to be positioned adjacent to the opposite sides of the attachment mechanism 156, see Fig. 13. The cylindrical tube 162 is sized to mate with a C-shaped channel or structure 166 formed in the attachment mechanism 156, see Fig. 14. It should be understood that the attachment mechanism 156 and the connector 160 can be of various designs.

The header 158 is removable from the attachment mechanism 156. This means that the header 158 can be removed from the attachment mechanism 156 and stored separately when not needed.

The attachment mechanism 156 should be capable of raising and lowering the header 158, when desired. The elevation of the header 158, relative to the ground, can be adjusted for cutting plants 42 at different heights. The attachment mechanism 156 should also be capable of raising the header 158 off the ground, from between about 15 cm to about 91 cm (about 6 inches to about 36 inches), so that the header 158 can be transported on a paved roadway.

The header 158 includes all the mechanism shown in Fig. 3 from the pick-up head 48 to the pair of augers 110, 110. All the mechanism after the pair of augers 110, 110 would be contained in the self-propelled unit 144. The self-propelled unit 144 could also include the spout 119 for directing the chopped crop into a storage wagon 120.

The header 158 includes the pick-up head 48, the cutting mechanism 54, and the moving web 68, the first moisture removal mechanism 56, the second moisture removal mechanism 70, and all the mechanical elements and rolls described above with reference to Figs. 3, 4, 5 and 7 - 11, up to and including the pair of augers 110, 110.

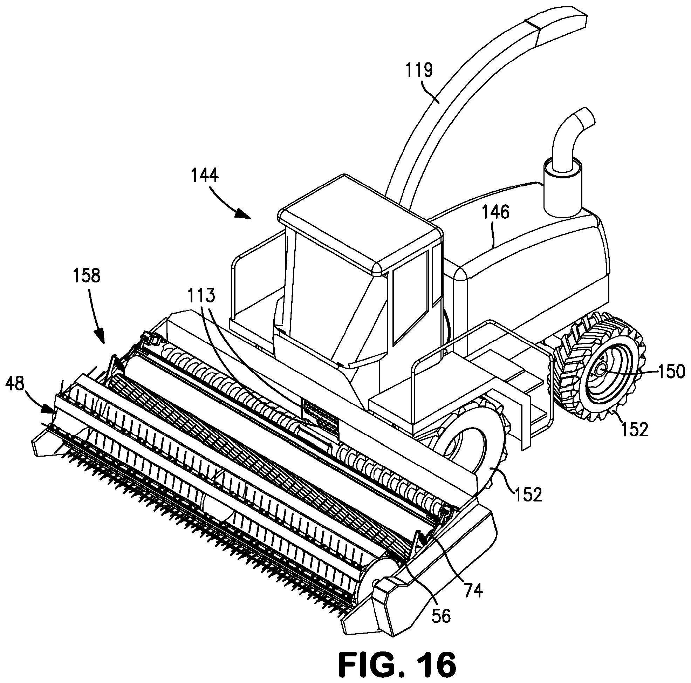

Referring to Fig. 16, a self-propelled harvesting machine 144 is shown having a header 158 attached to the front thereof.

It should be understood that the header 158 could also be attached to an existing chopper type machine, which is either self-propelled or a pull-type unit.

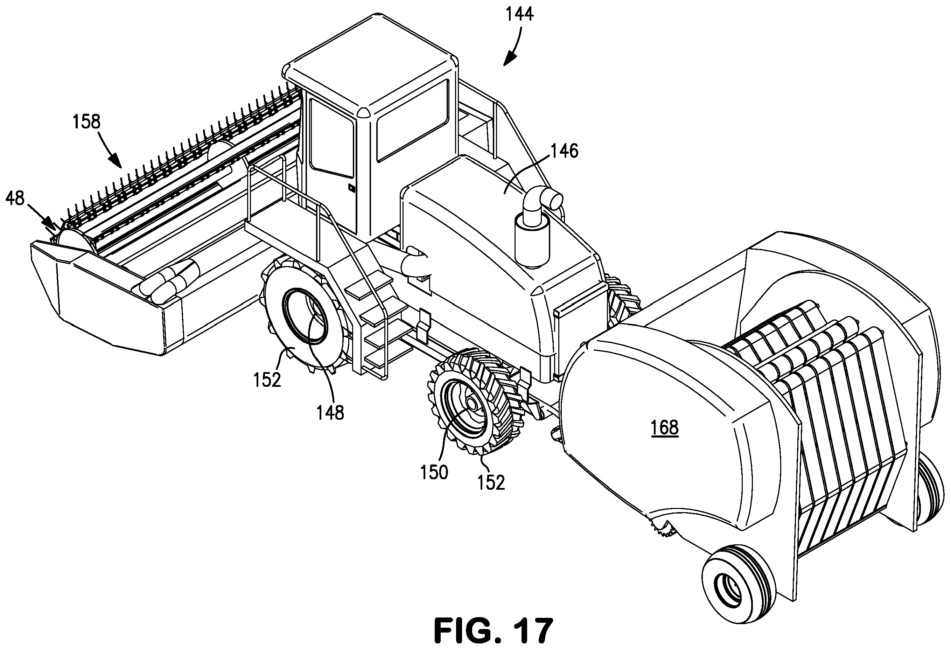

Referring now to Fig. 17, a self-propelled harvesting machine 144 is shown having a header 158 attached to the front thereof and which is towing a baler 168. The baler 168 is a separated unit. The baler 168 can form round bales or rectangular bales, depending on its construction. Today, various makes and models of balers 168 are manufactured by a number of farm implement companies. The bales can be individually wrapped in plastic or be inserted into a hollow tube of plastic to prevent them for rotting. Alternatively, the bales could be transported to a barn or shed for storage.

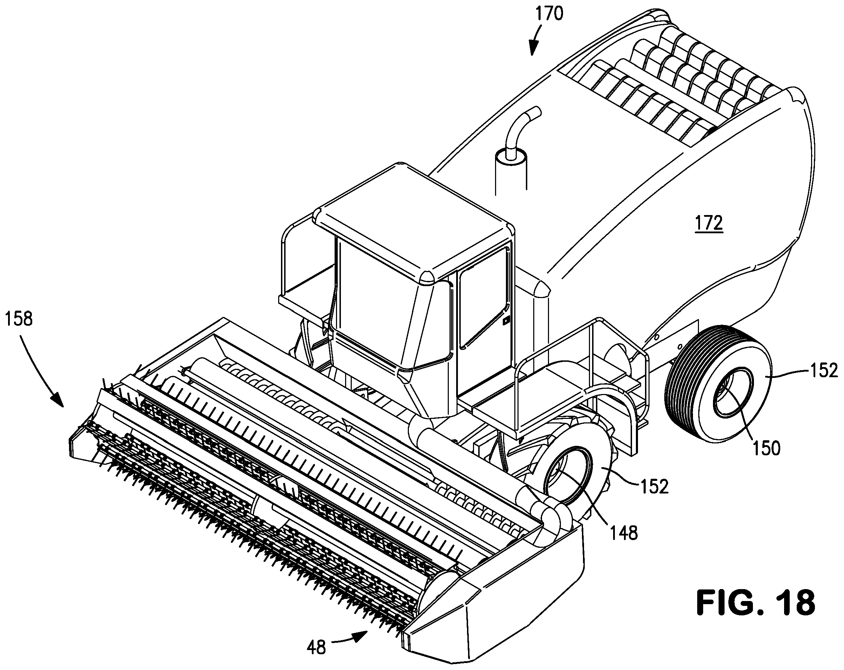

Referring now to Fig. 18, an alternative self-propelled harvesting machine 170 is shown which includes an integral baler unit 172. The self-propelled harvesting machine 170 includes a header 158 attached to the front thereof. The self-propelled unit 170 integrally incorporates the baler unit 172. In other words, the baler unit 172 is not a separate implement supported by an axle and a pair of wheels, as is shown in Fig. 17.

It should also be understood that a self-propelled baler, such as those manufactured by Vermeer Corporation, having an office at 1410 Vermeer Road East, Pella, Iowa, 50219 could also be utilized. In this case, the harvesting machine 144 would deposit a narrow web of cut stems 44 onto the ground, after the moisture content of the cut stems has been reduced. The self-propelled baler would then come along and bale the narrow web of cut stems 44 into either a round bale or into a rectangular bale.

### METHOD

A method of operating a harvesting machine 10 or 16 is also disclosed. Referring to Figs. 3 and 4, the harvesting machine 10 or 16 has a frame 26 with a first end 28 and a second end 30, at least one axle 32 having a pair of wheels 34, 34. The harvesting machine 10 or 16 also has a bottom plate 36 positioned adjacent to the first end 28. The bottom plate 36 has a front edge 38 and a rear edge 40. The bottom plate 36 is inclined upward towards the rear edge 40. A pick-up head 48 is rotatably mounted on the first end 28 of the frame 26. The pick-up head 48 has at least two spaced apart and outwardly extending finger sets 50, 50. Each finger set 50, 50 contain a plurality of fingers 52 spaced apart from one another across the width of the pick-up head 48. Each finger set 50, 50 sequentially contact the growing plants 42 in a field. Each plant 42 has a stem 44 containing a relatively high moisture content and a base 46. Each of the finger sets 50, 50 will bend the stems 44 downward onto the bottom plate 36 and towards the incline. A cutting mechanism 54 is mounted on the bottom plate 36 below the pick-up head 48. The cutting mechanism 54 cuts each of the stems 44 at the respective base 46 as the harvesting machine 10 or 16 traverses a crop field. The harvested crop is directed to a first moisture removal mechanism 56 having a first nip 62 positioned between a first suction roll 58 and a first press roll 60. The cut stems 44 are directed through the first nip 62 wherein a moving web 68 is formed and where from between about 10% to about 20% of the moisture from the stems 44 is removed. The moving web 68 has a width equal to the width of the pick-up head 48. The moving web 68 is then directed through a second nip 75 formed by a second suction roll 72 and a second press roll 74. At the second nip 75, another 5% to about 15% of the moisture from the stems 44 is removed. A third nip (not shown) could further be utilized to remove an additional 1% to about 10% of the moisture from the stems 44, if desired.

The first moisture removal mechanism 56 and the second moisture removal mechanism 70 support a moving belt 98. One or both of the first and second suction rolls, 58 and 72 respectively, can be a drive roll. Desirably, the second moisture removal mechanism 70 is a drive roll. The moving belt 98 forms a closed loop around the first pair of rolls, 58 and 60 and around the second pair of rolls 72 and 74. The moving belt 98 has a plurality of small apertures 100 formed therethrough. The first and second moisture removal mechanisms 56 and 70 function to lower the moisture content in the cut stems 44 by squeezing each of the stems 44 and forcing liquid out of an end of each of the stems 44.

A crop converging mechanism 106 is located downstream of the second moisture removal mechanism 70. The crop converging mechanism 106 reduces the width of the moving web 68 to a narrow ribbon 108 of cut stems 44. The narrow ribbon 108 has a width of about 76 cm (30 inches) or less. Desirably, the narrow ribbon 108 has a width of about 71 cm (28 inches). More desirably, the narrow ribbon 108 has a width of about 66 cm (26 inches). Even more desirably, the narrow ribbon 108 has a width of about 61 cm (24 inches). The crop converging mechanism 106 including a pair of rotating augers 110, 110 aligned on a common shaft 111. One auger 110 can be a right-handed auger and the other auger 110 can be a left-handed auger. The pair of augers 110, 110 can forcibly reduce the width of the moving web 68 by causing a portion of the moving web 68 to move towards the center of the moving web 68. A chopper 115 is positioned downstream of the crop converging mechanism 106 and a blower 118 is positioned downstream of the chopper 115.

The method includes the steps of attaching the harvesting machine 10 to a tractor 12 which can push or pull the harvesting machine 10 back and forth across a crop field for the purpose of harvesting a crop, such as alfalfa. Alternatively, the self propelled harvesting machine 16 can be utilized.

The harvesting machine 10 can be hydraulically, pneumatically, mechanically and/or electrically connected to the tractor 12. The pick-up head 48 will rotate as the harvesting machine 10 is pushed or pulled across the crop field. The cutting mechanism 54 is activated to cut each of the stems 44 at the base 46 as the rotating pick-up head 48 advances through the crop field. The pick-up head 48 moves the cut stems 44 along the bottom plate 36 and into contact with the first nip 62 to form a moving web 68. The moving web 68 is then directed through a second nip 75 to lower the moisture content of the cut stems 44. This is accomplished by squeezing the stems 44 which pushes the liquid from inside each stem 44 through the end opening in each stem 44. This liquid is then sucked into the first and second suction rolls, 58 and 72 respectively, by negative pressure. The moving web 68, with its reduced moisture content, is directed to a crop converging mechanism 106 wherein the width of the moving web 68 is reduced to form a narrow ribbon 108 having a width of about 76 cm (30 inches) or less. The chopper 115 is then used to chop the narrow ribbon 108 into small pieces 117 and a blower 118 is used to blow the small pieces 117 into a storage wagon 120 for transport to a storage facility 122.

The method is beneficial in lowering and reducing the moisture content in the cut stems 44 of plants 42 by at least about 25%. Desirably, the method can lower and reduce the moisture content in the cut stems 44 of plants 42 by at least about 30%. More desirably, the method can lower and reduce the moisture content in the cut stems 44 of plants 42 by at least about 40%. Even more desirably, the method can lower and reduce the moisture content in the cut stems 44 of plants 42 by at least about 45%. Most desirably, the method can lower and reduce the moisture content in the cut stems 44 of plants 42 by at least about 50%. This can be accomplished when the stationary member 82 is operated to pull a negative pressure ranging from between about -34 kPa to about -69 kPa (about -5 psi to about -10 psi).

The method also includes connecting a central bore 126 of the stationary member 86 to a storage vessel 136 using a first conduit 130. The storage vessel 136 is then connected by a second conduit 134 to a vacuum pump 132. The storage vessel 136 is attached to the frame 26 and is equipped with a drain valve 138 and a drain pump 139. Moisture removed from the cut stems 44, in the form of a liquid, and air are routed from the stationary member 86, through the first conduit 130 to the storage vessel 136. From the storage vessel 136, the air is routed to the vacuum pump 132 while the liquid is collected in the storage vessel 136. The liquid is temporarily retained in the storage vessel 136. The collected liquid can be removed through the drain valve 138 by the drain pump 139. This liquid can be used for various purposes, as was explained above.

The removal of moisture from the stems 44 allow the crop to be harvested and prepared for storage immediately. Crops can be stored in a variety of ways. One method is to chop the high moisture hay, commonly referred to as "hay-lage", and store it in a vertical silo or in horizontal storage bags or in concrete bunkers. A second method is to bale the high moisture crop in the field and then either leave the bales in the field or store them in a building. The bales can be either round or rectangular in shape and are made with baling machines which will produce a particular configuration.

Traditionally, the bales were made with dried hay. Then it was realized that hay having a high moisture content was found to be better feed for animals. This led to individually wrapping and sealing each bale in plastic to preserve its feed value. Now, baling machines are designed to pick-up the cut alfalfa from a windrow placed on the ground. The proposed harvesting machine 10, 16 or 144 of this invention can be designed to provide a windrow of high moisture alfalfa immediately available to be baled. Ideally, this could be accomplished with a single harvesting machine 10, 16 or 144 but from a practical standpoint, it is more feasible that the harvesting machine 10, 16 or 144 will be constructed to cut, remove the moisture from the stems 44 and then lay the harvested crop back on the ground. The crop can then be immediate picked up by a baling machine which is either towed behind the harvesting machine 10, 16 or 144 or which is a separate self-propelled baling machine.

It is also possible that a harvesting machine 10, 16 or 144 could be designed to cut the alfalfa crop, remove the moisture from the stems 44, converge the moving web 68 into a narrow ribbon 108, and then bale the moving web 68 all in single pass over the field.

While the invention has been described in conjunction with several specific embodiments, it is to be understood that many alternatives, modifications and variations will be apparent to those skilled in the art in light of the foregoing description. Accordingly, this invention is intended to embrace all such alternatives, modifications and variations which fall within the scope of the appended claims.

## Claims

1. A harvesting machine (10), comprising:
a) a frame (26) having a first end (28) and a second end (30), and having a bottom plate (36) positioned adjacent to said first end (28), and said bottom plate (36) having a front edge (38) and a rear edge (40);
b) a rotatable pick-up head (48) pivotally mounted on said first end (28) of said frame (26), said pick-up head (48) having at least two spaced apart and outwardly extending finger sets (50), each finger set (50) containing a plurality of fingers (52) spaced apart from one another across the width of said pick-up head (48), each finger set (50) sequentially contacting growing plants (42) in a field, each plant (42) having a stem (44) containing a high moisture content and a base (46), and each of said finger sets (50) bending said stems (44) downward onto said bottom plate (36);
c) a cutting mechanism (54) mounted on said bottom plate (36) below said pick-up head (48), said cutting mechanism (54) cutting each of said stems (44) at said respective base (46) to form a moving web (68) of said cut stems (44) as said harvesting machine (10) traverses a crop field;
d) a first moisture removal mechanism (56) positioned downstream of said cutting mechanism (54);
e) a second moisture removal mechanism (70) positioned downstream of said first moisture removal mechanism (56);
and
f) a moving belt (98) forming a closed loop around both said first and second moisture removal mechanisms (56, 70);
**characterised in that**
said first moisture removal mechanism (56) includes a first suction roll (58) positioned below a first press roll (60);
said second moisture removal mechanism (70) includes a second suction roll (72) positioned below a second press roll (74);
said moving belt (98) has a plurality of apertures (100) formed therethrough, said moving belt (98) forming a first nip (62) with said first press roll (60) and a second nip (75) with said second press roll (74) for squeezing moisture out of said stems (44) as said movable web (68) is routed through said first and second nips (62, 75).

2. The harvesting machine (10) of claim 1, further comprising at least one axle (32) having a pair of wheels (34).

3. The harvesting machine (10) of claim 1 or 2, wherein said first moisture removal mechanism (56) is identical in construction to said second moisture removal mechanism (70).

4. The harvesting machine (10) of claim 1 or 2, wherein said second moisture removal mechanism (70) is inclined relative to said first moisture removal mechanism (56).

5. The harvesting machine (10) of claim 1 or 2, wherein said first moisture removal mechanism (56) is positioned in front of and slightly below said second moisture removal mechanism (70).

6. The harvesting machine (10) of claim 1 or 2, wherein said first suction roll (58) is positioned in front of and slightly below said second suction roll (72).

7. The harvesting machine (10) claim 1 or 2, wherein said first press roll (60) is positioned in front of and slightly below said second press roll (74).

8. The harvesting machine (10) of claim 1 or 2,
wherein said bottom plate (36) of said frame (26) is inclined upward towards said rear edge (40);
wherein each of said finger sets (50) of said pick-up head (48) is configured for bending said stems (44) downward towards said incline;
wherein said plurality of apertures (100) formed through said moving belt (98) are small; and
herein said moving belt (98) routes said movable web (68) into a baler (168; 172) to form a bale.

9. The harvesting machine (10) of claim 1, 2 or 8 wherein a crop converging mechanism (106) is located downstream of said second moisture removal mechanism (70), said crop converging mechanism (106) including a pair of rotating augers (110) aligned on a common axis or shaft (111) which can forcibly reduce the width of said moving web (68) to a narrow ribbon (108) having a width (w₂) of less than about 30 inches.

10. The harvesting machine (10) of claim 2 or 8 wherein said harvesting machine (10) either is a self-propelled unit (16) which includes a baler (172) or is a self-propelled unit and a baler (168) is towed behind said self-propelled unit.

11. The harvesting machine (10) of claim 8,
wherein said first nip (62) reduces the moisture content of said moving web (68) by at least 15% or
wherein said second nip (75) reduces the moisture content of said moving web (68) by at least 10%.

12. The harvesting machine of claim 1, being a header for attachment to a self-propelled unit or to a chopper type machine, which is either self-propelled or a pull-type unit.

13. A method of operating a harvesting machine (10), said harvesting machine (10) having a frame (26) with a first end (28) and a second end (30), at least one axle (32) having a pair of wheels (34), and having a bottom plate (36) positioned adjacent to said first end (28), said bottom plate (36) having a front edge (38) and a rear edge (40), and said bottom plate (36) is inclined upward towards said rear edge (40); a rotatable pick-up head pivotally mounted on said first end (28) of said frame (26), said pick-up head (48) having at least two spaced apart and outwardly extending finger sets (50), each finger set (50) containing a plurality of fingers (52) spaced apart from one another across the width of said pick-up head (48), each finger set (50) sequentially contacting growing plants (42) in a field, each plant (42) having a stem (44) containing a relatively high moisture content and a base (46), and each of said finger sets (50) bending said stems (44) downward onto said bottom plate (36) and towards said incline; a cutting mechanism (54) mounted on said bottom plate (36) below said pick-up head (48), said cutting mechanism (54) cutting each of said stems (44) at said respective base (46) to form a movable web (68) of said cut stems (44) as said harvesting machine (10) traverses a crop field; a first moisture removal mechanism (56) positioned downstream of said cutting mechanism (54), said first moisture removal mechanism (56) including a first suction roll (58) positioned below a first press roll (60), a second moisture removal mechanism (70) positioned downstream of said first moisture removal mechanism (56), said second moisture removal mechanism (70) including a second suction roll (72) positioned below a second press roll (74), and a moving belt (98) forming a closed loop around both said first and second moisture removal mechanisms (56, 70), said moving belt (98) having a plurality of apertures (100) formed therethrough, said moving belt (98) forming a first nip (62) with said first press roll (60) and a second nip (75) with said second press roll (74) for squeezing moisture out of said stems (44) as said movable web (68) is routed through said first and second nips (62, 75), said method comprising the steps of:
a) attaching said harvesting machine (10) to a self-propelled unit which can be driven across a field for the purpose of harvesting a crop;
b) rotating said pick-up head (48) and activating said cutting mechanism (54) to cut each of said stems (44) at said stem base (46) and routing said cut stems (44) into said harvesting machine (10) as a movable web (68); and
c) directing said movable web (68) between said first and second nips (62, 75) to reduce the moisture content of said movable web (68) by forcing moisture out of each of said stems (44).

14. The method of claim 13, further comprising lowering said moisture content in said cut stems (44) by at least about 20% or by at least about 25%.

15. The method of claim 13, further comprising baling said movable web (68) into a bale or else further comprising depositing said movable web (68) onto the ground, after said moisture content has been reduced, and then using a self-propelled baler (168) to bale said movable web (68) which was deposited onto the ground.

## Patentansprüche

1. Erntemaschine (10), umfassend:
a) einen Rahmen (26) mit einem ersten Ende (28) und einem zweiten Ende (30), und mit einer Bodenplatte (36), die benachbart zum ersten Ende (28) positioniert ist, und wobei die Bodenplatte (36) eine Vorderkante (38) und eie Hinterkante (40) aufweist;
b) ein rotierbarer Aufnahmekopf (48), der schwenkbar am ersten Ende (28) des Rahmens (26) montiert ist, wobei der Aufnahmekopf (48) wenigstens zwei voneinander beabstandete und sich auswärts erstreckende Fingersätze (50) aufweist, wobei jeder Fingersatz (50) mehrere voneinander über die Breite des Aufnahmekopfs (48) beabstandete Finger (52) aufweist, wobei jeder Fingersatz (50) sequenziell auf einem Feld wachsende Pflanzen (42) kontaktiert, wobei jede Pflanze (42) einen Halm (44) mit einem hohem Feuchtigkeitsgehalt und eine Basis (46) aufweist, und wobei jeder Fingersatz (50) die Halme (44) abwärts auf die Bodenplatte (36) drückt;
c) einen Schneidmechanismus (54), der an der Bodenplatte (36) unterhalb des Aufnahmekopfs (48) montiert ist, wobei der Schneidmechanismus (54) jeden der Halme (44) an seiner Basis (46) derart abschneidet, das seine bewegliche Bahn (68) der abgeschnittenen Halme gebildet wird, indem die Erntemaschine (10) einen Acker überquert;
d) einen ersten Feuchtigkeits-Entfernungs-Mechanismus (56), der stromab des Schneidmechanismus (54) positioniert ist;
e) einen zweiten Feuchtigkeits-Entfernungs-Mechanismus (70), der stromab des ersten Feuchtigkeits-Entfernungs-Mechanismus (56) positioniert ist; und
f) einen bewegten Riemen (98), der eine geschlossene Schlaufe um sowohl den ersten als auch den zweiten Feuchtigkeits-Entfernungs-Mechanismus (56, 70) bildet,
**dadurch gekennzeichnet, dass**
der erste Feuchtigkeits-Entfernungs-Mechanismus (56) eine erste Saugwalze (58) umfasst, die unterhalb einen ersten Presswalze (60) angeordnet ist;
wobei der zweite Feuchtigkeits-Entfernungs-Mechanismus (70) eine zweite Saugwalze (72) umfasst, die unterhalb einen zweiten Presswalze (74) angeordnet ist;
wobei der bewegte Riemen (98) mehrere dahindurch gebildete Öffnungen (100) aufweist,
wobei der bewegte Riemen (98) einen ersten Spalt (62) mit der ersten Presswalze (60) und einen zweiten Spalt (75) mit der zweiten Presswalze (74) bildet, um Feuchtigkeit aus den Halmen (44) zu pressen, indem die bewegliche Bahn (68) durch den ersten und zweiten Spalt (62, 75) geführt wird.

2. Erntemaschine (10) nach Anspruch 1, ferner umfassend wenigstens eine Achse (32) mit einem Paar Räder (34).

3. Erntemaschine (10) nach Anspruch 1 oder 2, wobei der erste Feuchtigkeits-Entfernungs-Mechanismus (56) identisch zum zweiten Feuchtigkeits-Entfernungs-Mechanismus (70) aufgebaut ist.

4. Erntemaschine (10) nach Anspruch 1 oder 2, wobei der zweite Feuchtigkeits-Entfernungs-Mechanismus (70) in Bezug auf den ersten Feuchtigkeits-Entfernungs-Mechanismus (56) geneigt ist.

5. Erntemaschine (10) nach Anspruch 1 oder 2, wobei der erste Feuchtigkeits-Entfernungs-Mechanismus (56) vor und ein wenig unterhalb des zweiten Feuchtigkeits-Entfernungs-Mechanismus (70) angeordnet ist.

6. Erntemaschine (10) nach Anspruch 1 oder 2, wobei die erste Saugwalze (58) vor und ein wenig unterhalb der zweiten Saugwalze (72) angeordnet ist.

7. Erntemaschine (10) nach Anspruch 1 oder 2, wobei die erste Presswalze (60) vor und ein wenig unterhalb der zweiten Presswalze (74) angeordnet ist.

8. Erntemaschine (10) nach Anspruch 1 oder 2,
wobei die Bodenplatte (36) des Rahmens (26) aufwärts zu der Hinterkante (40) geneigt ist;
wobei jeder der Fingersätze (50) des Aufnahmekopfs (48) dazu ausgebildet ist, die Halme (44) abwärts zu der Neigung zu biegen;
wobei die mehreren Öffnungen (100), die in dem bewegten Riemen (98) gebildet sind, klein sind; und
hierbei der bewegte Riemen (98) die bewegliche Bahn (68) in einen Presser (168; 172) führt, um eine Ballen zu bilden.

9. Erntemaschine (10) nach Anspruch 1, 2 oder 8, wobei ein Ernte-Konvergier-Mechanismus (106) stromab des zweiten Feuchtigkeits-Entfernungs-Mechanismus (70) angeordnet ist, wobei der Ernte-Konvergier-Mechanismus (106) ein Paar von rotierenden Schnecken (110) umfasst, die mit einer gemeinsamen Achse oder Welle (111) ausgerichtet sind, und welche die Breite der beweglichen Bahn (68) auf ein schmales Band (108) mit einer Breite (w₂) von weniger als etwa 30 Zoll zu zwängen vermögen.

10. Erntemaschine (10) nach Anspruch 2 oder 8, wobei die Erntemaschine (10) entweder eine selbstfahrende Einheit (16) ist, welche einen Presser (172) aufweist, oder eine selbstfahrende Einheit ist und ein Presser (168) hinter der selbstfahrenden Einheit hergezogen wird.

11. Erntemaschine (10) nach Anspruch 8,
wobei der ersts Spalt (62) den Feuchtigkeitsgehalt der beweglichen Bahn (68) um wenigstens 15% verringert, oder
wobei der zweite Spalt (75) den Feuchtigkeitsgehalt der beweglichen Bahn (68) um wenigstens 10% verringert.

12. Erntemaschine (10) nach Anspruch 1, welche ein Header zur Anbringung an eine selbstfahrende Einheit oder an eine Mäh-Typ-Maschine ist, welche entweder selbstfahrend oder eine Einheit vom Zug-Typ ist.

13. Verfahren zum Betreiben einer Erntemaschine (10), wobei die Erntemaschine (10) einen Rahmen (26) mit einem ersten Ende (28) und einem zweiten Ende (30), wenigstens eine Achse (32) mit einem Paar Räder (34), und eine Bodenplatte (36) aufweist, die benachbart zum ersten Ende (28) angeordnet ist, wobei die Bodenplatte (36) eine Vorderkante (38) und eine Hinterkante (40) aufweist, und die Bodenplatte (36) zur Hinterkante (40) hin aufwärts geneigt ist; wobei ein rotierbaree Aufnahmekopf schwenkbar an dem ersten Ende (28) des Rahmens (26) montiert ist, wobei der Aufnahmekopf (48) wenigstens zwei voneinander beabstandete und sich nach auswärts erstreckende Fingersätze (50) aufweist, wobei jeder Fingersatz (50) mehrere Finger (52) aufweist, die voneinander über die Breite des Aufnahmekopfs (48) beabstandet sind, wobei jeder Fingersatz (50) sequenziell auf einem Feld wachsende Pflanzen (42) kontaktiert, wobei jede Pflanze (42) einen Halm (44) mit einem relativ hohen Feuchtigkeitsgehalt und eine Basis (46) aufweist, und jeder der Fingersätze (50) die Halme (44) abwärts auf die Bodenplatte (36) und zu der Neigung hin biegt; wobei ein Schneidmechanismus (54), der an der Bodenplatte (36) unterhalb des Aufnahmekopfs (48) montiert ist, wobei der Schneidmechanismus (54) jeden der Halme (44) an seiner Basis (46) abschneidet, um eine bewegliche Bahn (68) aus den abgeschnittenen Halmen zu bilden, indem die Erntemaschine (10) einen Acker überquert; einen ersten Feuchtigkeits-Entfernungs-Mechanismus (56), der stromab des Schneidmechanismus (54) angeordnet ist, wobei der erste Feuchtigkeits-Entfernungs-Mechanismus (56) eine erste Saugwalze (58) beinhaltet, die unterhalb einer ersten Presswalze (60) angeordnet ist, einen zweiten Feuchtigkeits-Entfernungs-Mechanismus (70), der unterhalb des ersten Feuchtigkeits-Entfernungs-Mechanismus (56) angeordnet ist, wobei der zweite Feuchtigkeits-Entfernungs-Mechanismus (70) eine zweite Saugwalze (72) beinhaltet, die unterhalb einer zweiten Presswalze (74) angeordnet ist, und ein bewegter Riemen (98) eine geschlossene Schlaufe um sowohl den ersten als auch den zweiten Feuchtigkeits-Entfernungs-Mechanismus (56, 70) bildet, wobei der bewegte Riemen (98) mehrere dahindurch gebildete Öffnungen (100) aufweist, wobei der bewegte Reiemen (98) einemn ersten Spalt (62) mit der ersten Presswalze (60) und einen zweiten Spalt (75) mit der zweiten Presswalze (74) bildet, zum Quetschen von Feuchtigkeit aus dem Halmen (44) indem die bewegliche Bahn (68) durch den ersten und zweiten Spalt (62, 75) geführt wird, wobei das Verfahren die folgenden Schritte umfasst:
a) Anbringen der Ernetmaschine (10) an einer selbstfahrenden Einheit, welche zum Zweck des Aberntens über ein Feld gefahren werden kann;
b) Rotieren des Aufnahmekopfs (48) und Aktivieren des Schneidmechanismus (54) zum Abschneiden jedes der Halme (44) an seiner Halmbasis (46) und führen der abgeschnittenen Halme (44) als eine bewegliche Bahn (68) in die Erntemaschine (10); und
c) Dirigieren der beweglichen Bahn (68) zwischen den ersten und zweiten Spalt (62, 75) zum Verringern des Feucgtigkeitsgehalts der bweglichen Bahn (68) durch Zwängen von Feuchtigkeit aus jeden der Halme (44).

14. Verfahren nach Anspruch 13, ferner umfassend Verringern des Feuchtigkeitsgehalts in den abgeschnittenen Halmen (44) um wenigstens etwa 20% oder um wenigstens etwa 25%.

15. Verfahren nach Anspruch 13, ferner umfassend Pressen der beweglichen Bahn (68) zu einem Ballen oder aber ferner umfassend Ablegen der beweglichen Bahn (68) auf den Boden, nachdem der Feuchtigkeitsgehalt verringert worden ist, und dann Verwenden eines selbstfahrenden Pressers (168) zum Pressen der auf dem Boden abgelegten beweglichen Bahn (68).

## Revendications

1. Machine de récolte (10), comprenant :
a) un cadre (26) ayant une première extrémité (28) et une seconde extrémité (30), et ayant une plaque inférieure (36) positionnée de manière adjacente à ladite première extrémité (28), et ladite plaque inférieure (36) ayant un bord avant (38) et un bord arrière (40) ;
b) une tête de ramassage rotative (48) montée de manière pivotante sur ladite première extrémité dudit cadre (26), ladite tête de ramassage (48) ayant au moins deux ensembles de doigts espacés et s'étendant vers l'extérieur (50), chaque ensemble de doigts (50) contenant une pluralité de doigts (52) espacés les uns des autres sur la largeur de ladite tête de ramassage (48), chaque ensemble de doigts (50) entrant séquentiellement en contact avec des plantes en croissance (42) dans un champ, chaque plante (42) ayant une tige (44) contenant une teneur élevée en humidité et une base (46), et chacun desdits ensembles de doigts (50) pliant lesdites tiges (44) vers le bas sur ladite plaque inférieure et vers ladite plaque inférieure (36) ;
c) un mécanisme de coupe (54) monté sur ladite plaque inférieure (36) en dessous de ladite tête de ramassage (48), ledit mécanisme de coupe (54) coupant chacune desdites tiges (44) au niveau de ladite base (46) respective pour former une bande mobile (68) desdites tiges coupées (44) à mesure que ladite machine de récolte (10) traverse un champ de culture ;
d) un premier mécanisme d'élimination d'humidité (56) positionné en aval dudit mécanisme de coupe (54) ;
e) un second mécanisme d'élimination d'humidité (70) positionné en aval dudit premier mécanisme d'élimination d'humidité (56) ; et
f) une courroie mobile (98) formant une boucle fermée autour desdits premier et second mécanismes d'élimination d'humidité (56, 70) ; **caractérisé en ce que** ledit premier mécanisme d'élimination d'humidité (56) comporte un premier rouleau aspirant (58) positionné en dessous d'un premier rouleau presseur (60) ; ledit second mécanisme d'élimination d'humidité (70) comporte un second rouleau aspirant (72) positionné sous un second rouleau presseur (74) ; ladite courroie mobile (98) a une pluralité d'ouvertures (100) formées à travers celle-ci, ladite courroie mobile (98) formant un premier pincement (62) avec ledit premier rouleau presseur (60) et un second pincement (75) avec ledit second rouleau presseur (74) pour extraire l'humidité desdites tiges (44) à mesure que ladite bande mobile (68) est acheminée à travers lesdits premier et second pincements (62, 75).

2. Machine de récolte (10) selon la revendication 1, comprenant en outre au moins un essieu (32) ayant une paire de roues (34).

3. Machine de récolte (10) selon la revendication 1 ou 2, dans laquelle ledit premier mécanisme d'élimination d'humidité (56) est identique en construction audit second mécanisme d'élimination d'humidité (70).

4. Machine de récolte (10) selon la revendication 1 ou 2, dans laquelle ledit second mécanisme d'élimination d'humidité (70) est incliné par rapport audit premier mécanisme d'élimination d'humidité (56).

5. Machine de récolte (10) selon la revendication 1 ou 2, dans laquelle ledit premier mécanisme d'élimination d'humidité (56) est positionné en avant et légèrement en dessous dudit second mécanisme d'élimination d'humidité (70).

6. Machine de récolte (10) selon la revendication 1 ou 2, dans laquelle ledit premier rouleau d'aspiration (58) est positionné devant et légèrement en dessous dudit second rouleau d'aspiration (72).

7. Machine de récolte (10) selon la revendication 1 ou 2, dans laquelle ledit premier rouleau presseur (60) est positionné en avant et légèrement en dessous dudit second rouleau presseur (74).

8. Machine de récolte (10) selon la revendication 1 ou 2,
dans laquelle ladite plaque inférieure (36) dudit châssis (26) est inclinée vers le haut en direction dudit bord arrière (40) ;
dans lequel chacun desdits ensembles de doigts (50) de ladite tête de ramassage (48) est configuré pour plier lesdites tiges (44) vers le bas en direction de ladite inclinaison ;
dans lequel ladite pluralité d'ouvertures (100) formées à travers ladite courroie mobile (98) sont petites ; et
dans la présente, ladite courroie mobile (98) achemine ladite bande mobile (68) dans une presse à balles (168 ; 172) pour former une balle.

9. Machine de récolte (10) selon la revendication 1, 2 ou 8, dans laquelle un mécanisme de convergence de récolte (106) est situé en aval dudit second mécanisme d'élimination d'humidité (70), ledit mécanisme de convergence de récolte (106) comportant une paire de vis sans fin rotatives (110) alignées sur un axe ou arbre commun (111) qui peuvent réduire de force la largeur de ladite bande mobile (68) en un ruban étroit (108) ayant une largeur (w₂) inférieure à environ 30 pouces.

10. Machine de récolte (10) selon la revendication 2 ou 8, dans laquelle ladite machine de récolte (10) soit est une unité automotrice (16) qui comprend une presse à balles (172), soit est une unité automotrice et une presse à balles (168) est remorquée derrière ladite unité automotrice.

11. Machine de récolte (10) selon la revendication 8,
dans laquelle ledit premier pincement (62) réduit la teneur en humidité de ladite bande mobile (68) d'au moins 15 % ou
dans laquelle ledit second pincement (75) réduit la teneur en humidité de ladite bande mobile (68) d'au moins 10 %.

12. Machine de récolte (10) selon la revendication 1, étant une tête pour fixation à une unité autopropulsée ou à une machine de type hacheur, qui est une unité soit autopropulsée, soit tractée.

13. Procédé de fonctionnement d'une machine de récolte (10), la machine de récolte ayant un cadre (26) ayant une première extrémité (28) et une seconde extrémité (30), au moins un essieu (32) ayant une paire de roues (34), et ayant une plaque inférieure (36) positionnée à proximité de ladite première extrémité (28), ladite plaque inférieure (36) ayant un bord avant (38) et un bord arrière (40), et ladite plaque inférieure (36) est inclinée vers le haut vers ledit bord arrière (40) ; une tête de ramassage rotative montée de manière pivotante sur ladite première extrémité (28) dudit cadre (26), ladite tête de ramassage (48) ayant au moins deux ensembles de doigts espacés et s'étendant vers l'extérieur (50), chaque ensemble de doigts (50) contenant une pluralité de doigts (52) espacés les uns des autres sur la largeur de ladite tête de ramassage (48), chaque ensemble de doigts (50) entrant séquentiellement en contact avec des plantes en croissance (42) dans un champ, chaque plante (42) ayant une tige (44) contenant une teneur élevée en humidité et une base (46), et chacun desdits ensembles de doigts (50) pliant lesdites tiges (44) vers le bas sur ladite plaque inférieure (36) et vers ladite inclinaison ; un mécanisme de coupe (54) monté sur ladite plaque inférieure (36) au-dessous de ladite tête de ramassage (48), ledit mécanisme de coupe (54) coupant chacune desdites tiges (44) au niveau de ladite base (46) respective pour former une bande mobile (68) de dites tiges coupées (44) lorsque ladite machine de récolte (10) traverse un champ de cultures ; un premier mécanisme d'élimination d'humidité (56) positionné en aval dudit mécanisme de coupe (54), ledit premier mécanisme d'élimination d'humidité (56) comportant un premier rouleau aspirant (58) positionné en dessous d'un premier rouleau presseur (60), un second mécanisme d'élimination d'humidité (70) positionné en aval dudit premier mécanisme d'élimination d'humidité (56), ledit second mécanisme d'élimination d'humidité (70) comportant un second rouleau aspirant (72) positionné en dessous d'un second rouleau presseur (74), et une courroie mobile (98) formant une boucle fermée autour à la fois desdits premier et second mécanismes d'élimination d'humidité (56, 70), ladite courroie mobile (98) ayant une pluralité d'ouvertures (100) formées à travers celle-ci, ladite courroie mobile (98) formant un premier pincement (62) avec ledit premier rouleau presseur (60) et un second pincement (75) avec ledit second rouleau presseur (74) pour extraire l'humidité par pression desdites tiges (44) à mesure que ladite bande mobile (68) est acheminée à travers lesdits premier et second pincements (62, 75), ledit procédé comprenant les étapes consistant à :
a) fixer ladite machine de récolte (10) à une unité automotrice qui peut être conduite à travers un champ dans le but de récolter une culture ;
b) faire tourner ladite tête de ramassage (48) et actionner ledit mécanisme de coupe (54) pour couper chacune desdites tiges (44) à ladite base de tige (46) et acheminer lesdites tiges coupées (44) dans ladite machine de récolte (10) sous la forme d'une bande mobile (68) ; et
c) diriger ladite bande mobile (68) entre lesdites première et seconde zones de pincement (62, 75) pour réduire la teneur en humidité de ladite bande mobile (68) en expulsant l'humidité de chacune desdites tiges (44).

14. Procédé selon la revendication 13, comprenant en outre l'abaissement de ladite teneur en humidité dans lesdites tiges coupées (44) d'au moins environ 20 % ou d'au moins environ 25 %.

15. Procédé selon la revendication 13, comprenant en outre la mise en balle de ladite bande mobile (68) en une balle ou bien comprenant en outre le dépôt de ladite bande mobile (68) sur le sol, après que ladite teneur en humidité a été réduite, puis l'utilisation d'une presse à balles automotrice (168) pour mettre en balle ladite bande mobile (68) qui a été déposée sur le sol.
